(19) Europäisches Patentamt
European Patent Office
Office européen des brevets

(11) EP 3 532 898 B1

(12) **EUROPÄISCHE PATENTSCHRIFT**

(45) Veröffentlichungstag und Bekanntmachung des Hinweises auf die Patenterteilung:
**31.07.2024 Patentblatt 2024/31**

(21) Anmeldenummer: **17800409.9**

(22) Anmeldetag: **27.10.2017**

(51) Internationale Patentklassifikation (IPC):
***G03F 7/039*** *(2006.01)* ***C08F 212/14*** *(2006.01)*
***C08F 8/12*** *(2006.01)*

(52) Gemeinsame Patentklassifikation (CPC):
(C-Sets verfügbar)
**C08F 212/24; C08F 8/12; C08F 212/22;**
C08F 2438/02; C08F 2810/40 (Forts.)

(86) Internationale Anmeldenummer:
**PCT/EP2017/077626**

(87) Internationale Veröffentlichungsnummer:
**WO 2018/078108 (03.05.2018 Gazette 2018/18)**

(54) **VERFAHREN ZUR HERSTELLUNG EINES POLYMERISATES DURCH NITROXYL-KONTROLLIERTE POLYMERISATION SOWIE POLYMERISAT**

METHOD FOR PRODUCING A POLYMER BY NITROXYL-CONTROLLED POLYMERISATION, AND POLYMER

PROCÉDÉ DE PRODUCTION D'UN POLYMÉRISAT PAR POLYMÉRISATION CONTRÔLÉE PAR NITROXYLE ET POLYMÉRISAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2016 DE 102016221346**

(43) Veröffentlichungstag der Anmeldung:
**04.09.2019 Patentblatt 2019/36**

(73) Patentinhaber: **Fraunhofer-Gesellschaft zur Förderung der angewandten Forschung e.V.**
**80686 München (DE)**

(72) Erfinder:
- **KLEIN, Roland**
  **64372 Ob.-Ramstadt (DE)**
- **MAZUROWSKI, Markus**
  **64289 Darmstadt (DE)**
- **BURLON, Konrad**
  **64331 Weiterstadt (DE)**
- **WITTEMANN, Matthias**
  **64283 Darmstadt (DE)**
- **PFAENDNER, Rudolf**
  **64668 Rimbach (DE)**

(74) Vertreter: **Pfenning, Meinig & Partner mbB**
**Patent- und Rechtsanwälte**
**Theresienhöhe 11a**
**80339 München (DE)**

(56) Entgegenhaltungen:
**JP-A- 2000 026 535** **US-A- 6 107 425**
**US-A1- 2005 004 310** **US-A1- 2008 280 070**

- **CHESSA G ET AL: "Synthesis of three- and six-arms polystyrene via living/controlled free radical polymerisation", POLYMER, ELSEVIER SCIENCE PUBLISHERS B.V, GB, vol. 42, no. 23, 1 November 2001 (2001-11-01), pages 9347 - 9353, XP004301448, ISSN: 0032-3861, DOI: 10.1016/S0032-3861(01)00482-7**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **BAUMANN M ET AL: "ACETIC ANHYDRIDE - ACCELERATING AGENT FOR NITROXIDE-CONTROLLED FREE-RADICAL COPOLYMERIZATION OF STYRENE AND ACRYLONITRILE", MACROMOLECULAR CHEMISTRY AND PHYSICS, WILEY-VCH VERLAG, WEINHEIM, DE, vol. 202, no. 13, 18 September 2001 (2001-09-18), pages 2727 - 2731, XP001113477, ISSN: 1022-1352, DOI: 10.1002/1521-3935(20010901)202:13<2727::AID-MACP2727>3.0.CO;2-L**


(52) Gemeinsame Patentklassifikation (CPC): (Forts.)

C-Sets
**C08F 8/12, C08F 212/22;**
**C08F 212/24, C08F 212/22**

## Beschreibung

Die vorliegende Erfindung betrifft ein Verfahren zur Herstellung eines Polymerisates durch Nitroxyl-kontrollierte Polymerisation. Hierbei wird ein mindestens ein radikalisch polymerisierbares Monomer enthaltendes Gemisch, das zusätzlich mindestens einen Initiator, mindestens ein reaktives Agens, das zumindest einen Teil der bei der radikalischen Polymerisation erzeugten Alkoxyamin-Endgruppen in eine nichtpolymerisationsfähige Gruppe überführt sowie mindestens ein die Hydroxyl-kontrollierte Polymerisation und/oder die Überführung der Alkoxyamin-Endgruppen in eine nichtpolymerisationsfähige Gruppe beschleunigendes Additiv enthält, initiiert.

Die Photolithographie ist ein essenzieller Schritt im Herstellungsprozess elektronischer Halbleiterbauteile. Hierbei werden zur Erzeugung der notwendigen Strukturen Substrate mit einem Fotolack beschichtet und im Anschluss durch eine Maske belichtet. Bei einem Positivlack wird durch den Belichtungsprozess der belichtete Teil durch Veränderung der chemischen Struktur für bestimmte Lösemittel löslich, während der unbelichtete Teil unlöslich bleibt. Bei einem Negativlack dagegen wird der belichtete Teil durch Quervernetzung eines Polymers unlöslich. Durch anschließende Behandlung mit einem selektiven Lösungsmittel wird der lösliche Teil herausgelöst, wodurch das unter dem Lack befindliche Substrat zur weiteren selektiven Behandlung freigelegt wird. Fotolacke bestehen mindestens aus einem photosensitiven Agens und einem polymeren Binder, der durch das photosensitive Agens in den belichteten Bereichen in seiner Löslichkeit verändert wird.

Zur Herstellung immer kompakter und leistungsfähiger werdender elektronischer Geräte ist eine zunehmend steigende Bauteildichte notwendig die immer kleinere Strukturen erfordert. Damit steigen auch die Anforderungen an den Binder im Fotolack, der in der Lage sein muss, diese Strukturen abzubilden, die in einem Größenordnungsbereich von hundert bis wenigen hundert Nanometern liegen können. Um die Strukturen scharf abbilden zu können, muss der Binder über eine enge Molekulargewichtsverteilung verfügen, da breite Molekulargewichtsverteilungen zu lokal unterschiedlichen Löslichkeiten führen und damit feine Strukturen nicht scharf abgebildet werden können. Eine weitere wichtige Anforderung an den Binder ist eine möglichst geringe Konzentration an Verunreinigungen durch Metallionen, um keine elektrische Leitfähigkeit zu besitzen und um keine Beeinträchtigung der Belichtbarkeit durch farbige Metallionen zu verursachen. Darüber hinaus muss er thermisch stabil sein, so dass er durch die beim Verarbeitungsprozess herrschenden Temperaturen, die beispielsweise 130°C betragen können, hinsichtlich chemischer Zusammensetzung oder Molekulargewichtsverteilung nicht verändert wird. Ebenso wichtig ist ein wirtschaftlich durchführbares Herstellverfahren. Diese Produktziele sind beispielsweise in US 6107425; EP 0542523 A1, C. Mack "Fundamental Principles of Optical Lithography: The Science of Microfabrication" John Wiley & Sons Ltd, Chichester, 2007; H. Steppan, D. C. Mammato, T. Stoudt, M. C. P. Watts "Imaging Technology, 4. Imaging for Electronics" in "Ullmann's Ecyclopedia of Industrial Chemistry" Wiley-VCH, Weinheim, 2012 oder Z. J. Wang, M. Maric, Polymers 2014, 6, 565-582 beschrieben.

Als Binder für Fotolacke geeignete Polymere sind beispielsweise Polymere des 4-Hydroxystyrols und dessen Derivate mit der nachfolgend dargestellten allgemeinen Formel, auch in Kombination mit verschiedenen anderen Monomeren, beschrieben.

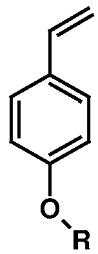

Der Rest R kann dabei Wasserstoff, eine Alkyl oder eine Acylgruppe sein. Ebenso können die aromatischen und olefinischen Protonen des oben dargestellten Styrolderivats durch andere Reste substitutiert sein. Als Comonomere sind unter anderem Styrol sowie verschiedene Acrylate und Methacrylate beschrieben.

Detaillierte Beschreibungen zu Polymeren, die für diese Anwendung geeignet sein können, findet man in zahlreichen Übersichtsartikeln und Buchkapiteln, wie z.B. in: R. Leuschner, G. Pawlowski "Photolithography" in "Handbook of Semiconductor Technology - Volume 2" K. A. Jackson, W. Schroter (Eds.), Wiley VCH, 2000.

Die Herstellung von Polymeren aus Vinylmonomeren mit enger Molekulargewichtsverteilung ist ebenfalls Stand der Technik und in Publikationen und Büchern beschrieben, wie z.B. in A.H.E. Müller, K. Matyjaszewski "Controlled and Living Polymerizations" Wiley VCH, 2009. Als Polymerisationstechniken kommen hierfür lebende, ionische Polymerisationen sowie kontrollierte radikalische Polymerisationen in Frage. Zu den ionischen Polymerisationen gehören die anionisch und die kationisch initiierte Polymerisation. Beispiele für kontrollierte radikalische Polymerisationen sind die ATRP (Atom Transfer Radical Polymerization), die RAFT (Reversible Addition-Fragmentation Transfer)-Polymerisation

oder die NMP (Nitroxide-Mediated Polymerization). Die hier aufgezählten, bekannten Verfahren zur Herstellung von Polymeren mit enger Molekulargewichtsverteilung sind bereits für die Synthese von Bindern für Fotolacke beschrieben. Die Binder können auch mit der herkömmlichen freien radikalischen Polymerisation hergestellt werden, allerdings resultieren daraus Polymere mit breiten Molekulargewichtsverteilungen.

Homo- und Copolymere des 4-Hydroxystyrols sind bei allen beschriebenen Methoden nicht direkt polymerisierbar. Aus diesem Grund wird Poly(4-hydroxystyrol) sowie dessen Copolymere in der Regel über ein mindestens zweistufiges Verfahren hergestellt. Hierbei werden zunächst Derivate des 4-Hydroxystyrols, bei denen die phenolische OH-Gruppe mit einer Gruppe substituiert versehen ist, die nicht in die Polymerisationsreaktion eingreift (Schutzgruppe), gegebenenfalls zusammen mit anderen Monomeren nach einem der beschriebenen Verfahren polymerisiert. Die Schutzgruppen der daraus entstehenden Polymere werden dann in einer polymeranalogen Umsetzung entfernt, so dass daraus Poly(4-hydroxystyrol) sowie dessen Copolymere resultieren. US 4898916 A beschreibt beispielsweise die säurekatalysierte, polymeranaloge Umsetzung von Poly(4-acetoxystyrol) und dessen Copolymeren zu Poly(4-hydroxystyrol) und den entsprechenden Copolymeren.

In JP 1992-209661 wird beispielsweise die anionische Polymerisation von 4-Methoxymethoxystyrol sowie die anschließende polymeranaloge Umsetzung des resultierenden Polymers zum Poly(4-hydroxystyrol) beschreiben. Nachteilig bei diesem Verfahren sind der große apparative Aufwand und die hohen Anforderungen, die an die Reinheit der Monomere und Lösungsmittel gestellt werden.

Wesentlich geringere Anforderungen an die Reinheit der Monomere sowie technisch einfacher durchführbar sind die kontrollierten radikalischen Polymerisationen. B. Gao., X. Chen, B. Iván, J. Kops, W. Batsberg beschreiben beispielsweise in Macromol. Rapid Commun. 1997, 18, 1095-1100 die Polymerisation von 4-Acetoxystyrol mit der ATRP zu Poly(4-acetoxytyrol) mit enger Molekulargewichtsverteilung. Dieses kann anschließend zu Poly(4-hydroxystyrol) polymeranalog verseift werden.

In einem anderen Beispiel (EP 1479700 A1) werden Poly(4-hydroxystyrol) und dessen Copolymere mit enger Molekulargewichtsverteilung durch radikalische Polymerisation von geschütztem 4-Hydroxystyrol in Anwesenheit eines Kettentransferagens (RAFT-Polymerisation) und anschließender polymeranaloger Entschützung der phenolischen OH-Gruppe hergestellt. Beide Verfahren haben Nachteile für die Verwendung der daraus erhaltenen Polymere als Binder für Fotolacke hinsichtlich Reinheit oder Molekulargewichtsverteilung.

Ein anderes Beispiel für eine kontrollierte radikalische Polymerisation, die die Synthese von geschützten 4-Hydroxystyrolderivaten gegebenenfalls auch zusammen mit anderen Monomeren ermöglicht, ist die NMP. Der Fortschritt der radikalischen Polymerisation wird dabei durch die Anwesenheit eines persistenten Nitroxid-Radikals dadurch kontrolliert, dass dieses mit den radikalischen Kettenenden reversibel rekombinieren kann, wobei temporär eine Alkoxyamingruppe am Kettenende entsteht. Übliche Polymerisationstemperaturen liegen im Bereich von 100 - 140 °C. Im Vergleich zur freien radikalischen Polymerisation ist die Wachstumsgeschwindigkeit bei der NMP stark herabgesetzt. Je nach eingesetztem Verhältnis zwischen Initiator und Monomer sowie der Konzentration der Komponenten im gewählten Lösungsmittel kann die Reaktionsdauer bis zum vollständigen Umsatz mehrere Tage betragen. Um die Synthese wirtschaftlicher zu gestalten, kann die Reaktionsgeschwindigkeit durch Zusatz eines Beschleunigers erhöht werden. E. Malmström, R. D. Miller und C. J. Hawker beschreiben beispielsweise in Tetrahedron, 1997, 53 (45), 15225-15236, dass Essigsäureanhydrid in der Lage ist, die Aminfunktion im Alkoxyamin zu acetylieren, wodurch die C-O-Bindung labiler wird. Die Reaktionsdauer konnte so von 48h auf 4h reduziert werden. H. Jianying, L. Jian, L. Minghua, L. Qiang, D. Lizong, Z. Yousi beschreiben in J. Polym. Sci. A Polym. Chem. 2005, 43, 5246-5256 die Wirksamkeit weiterer beschleunigender Additive wie z.B Trifluoressigsäureanhydrid, Acetylaceton, Acetessigester, Diethylmalonat, oder Malonitril.

Zur Erzeugung von Polymeren mit definiertem Molekulargewicht und enger Molekulargewichtsverteilung hat sich die unimolekulare Initiierung bewährt. Hier wird als Initiator ein Alkoxyamin eingesetzt, das bei Temperaturerhöhung in ein persistentes Nitroxid-Radikal und ein Alkylradikal dissoziiert und so die Polymerisation startet.

Die Polymerisation wird üblicherweise durch Absenken der Temperatur auf Raumtemperatur beendet. Dabei verbleibt eine Alkoxyamingruppe am Kettenende, die durch die Rekombination des radikalischen Kettenendes mit dem persistenten Nitroxidradikal gebildet wird.

Eine ausführliche Beschreibung über geeignete Monomere, Nitroxide und Polymerisationsverfahren sowie zu kinetischen Aspekten und geeigneten Charakterisierungsmethoden sind im Übersichtsartikel von J. Nicolas, Y. Guillaneuf, C. Lefay, D. Bertin, D. Gigmes, B. Charleux in Progress in Polymer Science 2013, 38, 63-235 zu finden.

Auch die Synthese von Polymeren, die als Binder für Fotolacke geeignet sind, mit der NMP ist bereits beschrieben. US 6107425 beschreibt die radikalische Polymerisation von geschütztem 4-Hydroxystyrol, wie beispielsweise dem 4-Acetoxystyrol in Anwesenheit eines persistenten Nitroxid-Radikals. Ebenso ist dort die unimolekulare Initiierung mit einem Alkoxyamin beschrieben. Die Polymerisation wird durch Absenken der Temperatur auf Raumtemperatur beendet. Das gewünschte Poly(4-hydroxystyrol) bzw. dessen Copolymere werden durch polymeranaloge Umsetzung erhalten.

Die NMP von 4-Hydroxystyrolderivaten ist auch in zahlreichen wissenschaftlichen Publikationen beschreiben, wie z. B:

Erzeugung von organisch-anorganischen Hybridpartikeln: C. Anger, F. Deubel, S. Salzinger, J. Stohrer, T. Halbach, R. Jordan, J. G. C. Veinot, B. Rieger, ACS Macro Lett. 2013, 2, 121-124.

Grundlegende Untersuchungen zur NMP von 4-Acetoxystyrol, Hydrolyse zu Poly(4-Hydroxystyrol), Untersuchung des molekulargewichtsabhängigen Löslichkeitsverhaltens: G. G. Barclay, C. J. Hawker, H. Ito, A. Orellana, P. R. L. Malenfant, R. F. Sinta Macromolecules 1998, 31, 1024-1031.

Neue Generation von Nitroxiden zur Polymerisation von u.a. 4-Acetoxystyrol und 4-t-Butoxystyrol: J. Areephong, K. M. Mattson, N. J. Treat, S. O. Poelma, J. W. Kramer, H. A. Sprafke, A. A. Latimer, J. Read de Alaniza, C. J. Hawker Polym. Chem. 2016, 7, 370.

Polymerisation verschieden geschützter 4-Hydroxystyrole mit der NMP zu Blockcopolymeren, mit dem Ziel amphiphile Blockcopolymere durch selektive Entschützung zu erzeugen: M. Messerschmidt, M. Millaruelo, H. Komber, L. Häussler, B. Voit, T. Krause, M. Yin, W.-D. Habicher, Macromolecules 2008, 41, 2821-2831.

In diesen Publikationen werden die Reaktionen dadurch beendet, dass die Temperatur auf Raumtemperatur abgesenkt wird. Dies hat zur Folge, dass die durch Rekombination des radikalischen Kettenendes mit dem persistenten Nitroxid-Radikal gebildete Alkoxyaminendgruppe am Kettenende verbleibt. Bei der späteren Weiterverarbeitung der so hergestellten Polymere bei Temperaturen über 100°C, wie sie beispielsweise bei thermoplastischen Verarbeitungsprozessen aber auch bei der Photolithographie vorkommen können, kann diese nach wie vor instabile und reaktive Endgruppe wieder in ein Alkylradikal am Kettenende und ein Nitroxid-Radikal gespalten werden, wodurch es zu Nebenreaktionen und damit auch zu unerwünschten Folgeprodukten kommen kann.

Um diese Reaktivierung der Polymerketten bei höheren Temperaturen zu vermeiden, können die Alkoxyamingruppen auf verschiedene Weise durch inerte oder andere funktionelle Gruppen substitutiert werden. In H. Malz, H. Komber, D. Voigt, J. Pionteck Macromol. Chem. Phys. 1998, 199,583-588 wird beispielsweise beschrieben, dass die Alkoxyaminendgruppen von Polystyrol, das mit der NMP synthetisiert wurde, durch erneutes Erhitzen in Gegenwart verschiedener Substanzen durch beispielsweise ein Wasserstoffatom, eine Alkoholgruppe oder eine Carbonylfunktion substituiert werden können. Die Einführung weiterer funktioneller Gruppen durch das Erhitzen Alkoxyamin-terminierter Polystyrole in Anwesenheit verschiedener Reagenzien wird von Y. Guillaneuf, P.-E. Dufils, L. Autissier, M. Rollet, D Gigmes und D. Bertin in Macromolecules 2010, 43, 91-100 beschrieben. Auch für geschützte Poly(4-hydroxystyrolderivate) und Copolymere ist die Substitution der Alkoxyaminendgruppe beschrieben. In EP 1572751 B1 wird beispielswiese beschrieben, dass durch Erhitzen eines mit der NMP hergestellten geschützten Poly(4-hydroxystyrols) in Anwesenheit eines Halogensilans sowohl die Schutzgruppen der Hydroxystyroleinheiten entfernt als auch die Alkoxyaminendgruppen durch eine Inerte Gruppe substituiert werden. In diesen und zahlreichen weiteren Beispielen wird die Schutzgruppe durch eine inerte Gruppe substituiert, indem das Polymer nach der Polymerisation erneut mit dem entsprechenden Agens erhitzt wird. Daraus ergibt sich für eine industrielle Verwendung der entscheidende Nachteil, dass ein zusätzlicher Prozessschritt mit weiteren Aufreinigungsprozeduren notwendig ist. Zur Lösung des Problems schlagen L. Petton, A. E. Ciolino, B. Dervaux und F E. Du Prez in Polym. Chem., 2012, 3, 1867-1878 vor, das Substitutionsagens nach gewünschtem Umsatz direkt zu dem Reaktionsgemisch zu geben, und bei der Polymerisationstemperatur weiterzurühren, bis alle Endgruppen substitutiert sind. Als Substitutionsagenzien werden hier Dodecanthiol, Thiophenol, Benzoylperoxid (BPO), Azo-bis(i-butyronitril) (AIBN) und Tetrabrommethan eingesetzt. Alle hier genannten Substitutionsagenzien haben den Nachteil, dass sie neue Polymerketten initiieren können, wenn bei Zugabe des Substitutionsagens noch Restmonomer im Gemisch vorhanden ist. Die Verwendung einer Verbindung, die nach Abgabe eines Wasserstoffradikals keine neuen Ketten starten kann, hätte hier einen entscheidenden Vorteil.

US 6,107,425 A stellt unter anderem neue Verfahren bereit, um wässrig entwickelbare Harzbindemittel für negativ wirkende Photoresists herzustellen. Die Verfahren umfassen im Allgemeinen die freie Radikalpolymerisation von einer oder mehreren Arten von Monomeren in Gegenwart eines radikalischen Polymerisationskontrollmittels, insbesondere eines Nitroxid-Polymerisationskontrollmittels, wie eines freien Piperidinyloxy-(N-oxy)-Radikals, und wobei mindestens eines von der Monomertyp enthält eine Einheit, die die Entwicklung einer wässrigen Lösung einer Photoresistzusammensetzung ermöglicht, die das gebildete Polymer enthält.

JP2000-026535A zeigt die Herstellung eines eng verteilten Polystyrolpolymers, das als Harzmaterial für Resists geeignet ist, sowie den Erhalt einer positiven Resistzusammensetzung vom chemischen Verstärkungstyp mit ausgezeichneter Empfindlichkeit und Auflösung unter Verwendung des eng verteilten Polystyrolpolymers.

US 2005/004310 A1 betrifft eine Verbundstoffzusammensetzung, die das Reaktionsprodukt einer Mischung aus einem Styrolpolymer, einer polaren Komponente mit nucleophilen funktionellen Gruppen und 0,5 bis 10 Gew.-% eines spezifischen Kompatibilisierungsmittels, enthält.

US 2008/280070 A1 betrifft Beschichtungszusammensetzungen, die ein polymeres oder copolymeres Verlaufmittel enthalten, das durch Nitroxyl-vermittelte Polymerisation hergestellt worden ist. Weitere Aspekte sind ein Verfahren zur Herstellung von glatten Oberflächenbeschichtungen und die Verwendung des Polymers oder Copolymers als Egalisiermittel in Beschichtungszusammensetzungen. Noch ein weiterer Aspekt sind spezifische ethylenisch ungesättigte Monomerzusammensetzungen, aus denen Copolymere durch radikalische Atomübertragungspolymerisation oder Nitroxyl-vermittelte Polymerisation erhalten werden können, wobei die Copolymere als Egalisiermittel in Beschichtungszusammensetzungen nützlich sind. Noch ein weiterer Aspekt ist die Verwendung von Poly-tert.-butylacrylat oder Poly-tert.-butylmethacrylat als Verlaufsmittel in Pulverlackzusammensetzungen.

G. Chessa et al. beschreiben die Synthese von drei- oder sechsarmigem Polystyrol mittels lebender kontrollierter freier radikalischer Polymerisation (Polymer. 42, 23, 9347-9353).

In Macromol. Chem. 202, 13, 2727-2731 beschreiben M. Baumann et al. Essigsäureanhydrid als beschleunigendes Agens für die Nitroxyl-kontrollierte freie radikalische Polymerisation von Styrol und Acrylnitril.

Aufgabe der vorliegenden Erfindung war es daher, ein Verfahren für die Herstellung mittels Nitroxyl-kontrollierter Polymerisation von Polymerisaten, insbesondere Homo- und Copolymeren des 4-Hydroxystyrols mit enger Molekulargewichtsverteilung anzubieten, das die oben angegebenen Nachteile nicht aufweist, d.h. weitgehend frei von Nebenreaktionen und unerwünschter Oligomerenbildung während der Polymerisation und der Endgruppensubstitution ist, aber gleichzeitig die Möglichkeit eines beschleunigten und damit wirtschaftlichen Herstellungsverfahren zulässt. Erfindungsgemäß soll zudem ein Verfahren bereit gestellt werden, bei dem die Bildung von Nebenprodukten oder Verunreinigungen minimiert oder vermieden werden kann.

Diese Aufgabe wird hinsichtlich eines Verfahrens mit den Merkmalen des Patentanspruchs 1gelöst. Die abhängigen Patentansprüche stellen dabei vorteilhafte Weiterbildungen dar.

Die Erfindung betrifft somit ein Verfahren zur Herstellung eines Polymerisates durch Nitroxyl-kontrollierte Polymerisation, umfassend die nachfolgenden Schritte:

a) Bereitstellen eines zur radikalischen Polymerisation fähigen Gemisches, enthaltend oder bestehend aus

i) mindestens ein durch radikalische Polymerisation polymerisierbares Monomer A1, oder ein Monomergemisch, enthaltend oder bestehend aus dem mindestens einen Monomer A1 sowie mindestens einem weiteren zur radikalischen Polymerisation befähigten, vom Monomeren A1 verschiedenem Monomer A2, und

ii) mindestens einen Initiator B, ausgewählt aus der Gruppe bestehend aus

einem Alkoxyamin B1, das die radikalische Polymerisation durch Spaltung in ein Alkyl- und ein Nitroxylradikal initiiert

und

einem Initiator B2, der mindestens einen Radikalstarter sowie mindestens ein Nitroxylradikal umfasst,

b) Initiierung der radikalischen Polymerisation und Aufrechterhaltung der Polymerisation über einen Zeitraum, der die Polymerisation zu einem Umsatz von 10 bis 100 % erlaubt,

c) Zugabe mindestens eines reaktiven Agens C nach einem Umsatz der Polymerisation zwischen 10% und 100% in einer Menge, die zumindest einen Teil oder die Gesamtheit der bei der Nitroxyl-kontrollierten radikalischen Polymerisation erzeugten Alkoxyamin-Endgruppen des Polymerisates in eine nicht polymerisationsfähige Gruppe überführt, sowie

d) Zugabe mindestens eines Additivs D zu einem oder mehrerer der Schritte a) bis c), das die Nitroxyl-kontrollierte Polymerisationsreaktion und/oder die Überführung der Alkoxyamin-Endgruppen des Polymerisates in eine nicht polymerisationsfähige Gruppe beschleunigt.

Dabei ist es unerheblich, ob die Schritte a) und b) in der hier aufgeführten oder in umgekehrter Reihenfolge oder gleichzeitig durchgeführt werden. Schritt c) erfolgt bevorzugt nach den Schritten a) und b), nachdem in den Schitten a) und b) ein gewünschter Umsatz (10 bis 100 %) erzielt wurde. Besonders bevorzugt wird der Schritt c) nach einem Umsatz von 50 bis 100 %, weiter bevorzugt von 75 bis 100 %, besonders bevorzugt 90 bis 100 %, insbesondere 95 bis 100 % durchgeführt.

Schritt d) kann vor jedem Schritt a) bis c) oder gleichzeitig zu diesen erfolgen. Insbesondere erfolgt Schritt d) nach und/oder während Schritt c).

Mit Hilfe dieses Verfahrens ist es insbesondere möglich, Polyhydroxystyrol Homo- und Copolymere herzustellen, die eine enge Molekulargewichtsverteilung haben und in einem vergleichsweise einfachen und schnellen Verfahren hergestellt werden können. Das erfindungsgemäße Verfahren zeichnet sich zudem dadurch aus, dass die Bildung von Nebenprodukten bei der Reaktion, die zu Verunreinigungen in den Endprodukten führen, unterdrückt werden können. Die erfindungsgemäß hergestellten Polymerisate zeichnen sich somit durch eine hohe Reinheit aus.

Überraschenderweise wurde festgestellt, dass durch die Zugabe des Beschleunigers (Additiv D) zum einen die Polymerisationsreaktion selbst beschleunigt werden kann, zum anderen die Abspaltung der Endgruppen, die durch das reaktive Agens C in das Polymer eingeführt werden, beschleunigt wird. Das erfindungsgemäße Verfahren kann somit als Eintopf-Reaktion ausgeführt werden, die Wirtschaftlichkeit der Verfahrensführung wird deutlich erhöht.

Weiterhin wurde überraschenderweise gefunden, dass bei der beschleunigten Endgruppensubstitution weniger Nebenreaktionen auftreten, da die Produkte, bei denen die Endgruppensubstitution beschleunigt durchgeführt wird, weitgehend frei von Nebenprodukten sind.

Insbesondere werden sämtliche der Schritte a) bis d) in einer Eintopfreaktion ausgeführt. Hierdurch kann die Einfachheit und Wirtschaftlichkeit des erfindungsgemäßen Syntheseverfahrens weiter gesteigert werden und gleichzeitig der apparative Aufwand minimiert werden.

Überraschenderweise wurde hierbei gefunden, dass die Kombination aus beschleunigter Polymerisation und in-situ-Endgruppensubstitution bei einer Eintopfreaktion zu Polymeren führt, die nach Entfernung der Schutzgruppen zu Polyhydroxystyrol Homo- und Copolymeren eine verbesserte Temperaturstabilität aufweisen.

Das Polymere kann somit die hier vorliegende Aufgabe ein Verfahren für die Synthese von PHS enthaltenden Polymeren anzubieten, die eine enge Molekulargewichtsverteilung und eine erhöhte Temperaturstabilität in einem wirtschaftlichen Prozess erlauben, erfüllen. Diese Aufgabe wurde erfindungsgemäß dadurch gelöst, dass das Polymere mittels NMP in Anwesenheit eines Beschleunigers erzeugt wird, und nach gewünschtem Umsatz die Alkoxyaminendgruppen der Polymerketten durch inerte Gruppen ersetzt werden, wobei der Beschleuniger bei der Substitutionsreaktion immer noch anwesend ist, so dass auch die Endgruppensubstiution beschleunigt abläuft. Diese Substitutionsreaktion kann dabei beispielsweise zusammen mit der zuvor erfolgten Polymerisation als Eintopfreaktion ausgeführt werden. Die Endgruppensubstitution läuft auch dann beschleunigt ab, wenn der Beschleuniger erst nach der Polymerisation, also vor oder gleichzeitig mit der Zugabe des reaktiven Agens C hinzugegeben wird.

Eine bevorzugte Ausführungsform sieht vor, dass das mindestens eine Monomer A1 ausgewählt ist aus der Gruppe der Hydroxystyrolmonomere, deren Hydroxygruppe mit einer bei den Bedingungen der radikalischen Polymerisation inerten Schutzgruppe geschützt ist, und/oder
das Monomergemisch mindestens ein Hydroxystyrolmonomer A1 sowie mindestens ein weiteres zur radikalischen Polymerisation befähigtes, vom Hydroxystyrolmonomer A1 verschiedenes Monomer A2 enthält oder hieraus besteht.

Besonders bevorzugt ist das Hydroxystyrolmonomer (Monomer A1) ausgewählt aus der Gruppe bestehend aus Alkoxy-, Aryloxy-, Acyloxy-, Silyloxy-, Carbamyloxy- oder Sulfonyloxy-substituierten Hydroxystyrolen, insbesondere 4-Acetoxystyrol, 4-t-Butoxystyrol, 4-Trimethylsilyloxystyrol, 4-t-Butyldimethylsilyloxystyrol, 4-Triethylsilyloxystyrol, 4-Triisopropylsilyloxystyrol, 4-Methoxystyrol, 4-Methoxymethoxystyrol, 4-Benzoxystyrol, 4-p-Methoxybenzoxystyrol, 4-Benzyloxymethoxyxstyrol, 4-t-Butyloxycarbonyloxystyrol, 4-Triphenylmethyloxystyrol, 4-Pivaloyloxystyrol, 4-Benzoyoloxystyrol, 4-p-Toluolsulfonyloxystyrol, und 4-Methylsulfonyloxystyrol. sowie Mischungen und Kombinationen hiervon.

Vorzugsweise wird das die Polymerisationsreaktion beschleunigende Additiv D in Schritt a), Schritt b) und/oder Schritt c) hinzugegeben.

Insbesondere ist das mindestens eine Additiv D ausgewählt ist aus der Gruppe bestehend aus Carbonsäurederivaten und Ketonen sowie Kombinationen.

Die Carbonsäurederivate sind dabei bevorzugt ausgewählt aus der Gruppe bestehend aus Carbonsäureanhydriden, Carbonsäureestern und Carbonsäurenitrilen, insbesondere Essigsäureanhydrid, Trifluoressigsäureanhydrid, Acetessigester, Diethylmalonat und/oder Malonitril; das Keton ist insbesondere Acetylaceton.

Das mindestens eine Additiv wird bevorzugt in einer Menge von 5 bis 600 mol-%, bevorzugt 20 bis 200 mol-%, besonders bevorzugt 100 bis 150 mol-%, bezogen auf die Menge des Initiators B eingesetzt.

Das weitere zusätzliche Monomere A2, das im Monomergemisch zusätzlich zum Monomer A1 vorhanden sein kann, ist vorzugsweise ausgewählt aus der Gruppe bestehend aus Styrolen, Isopren, Butadien und Acrylaten, insbesondere Acrylaten mit der nachfolgend abgebildeten Formel

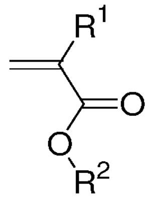

wobei jeweils unabhängig voneinander

- $R^1$ Wasserstoff oder eine Alkylgruppe, insbesondere eine Methylgruppe und
- $R^2$ eine Methyl-, Ethyl-, n-Propyl-, i-Propyl-, n-Butyl-, i-Butyl-, t-Butyl-, t-Amyl-, Benzyl-, Cyclohexyl-, 9-Anthracenyl-, 2-Hydroxyethyl-, 3-Phenyl-2-propenyl, Adamantyl-, Methyladamantyl-, Ethyladamantyl-, Isobornyl-, 2-Ethoxyethyl-, n-Heptyl-, n-Hexyl-, 2-Hydroxypropyl-, 2-Ethylbutyl-, 2-Me-thoxypropyl-, 2-(2-Methoxyethoxy), 2-Naphthyl-, 2-Phenylethyl-, Phenyl-, Lauryl-, Myristyl-, Cetyl-, Stearyl-, Ceryl-, i-Decyl-, 2-Ethylhexyl-, Ethyltriglycol-, Tetrahydrofurfuryl-, Butyldiglycol-, 2-Dimethylaminoethyl-, Polyethylenglycol-, Methylpolyethylenglycol- oder Glycidyl-

gruppe bedeuten.

Für den Fall, dass ein Monomerengemisch aus dem Monomeren A1, insbesondere dem Hydroxystyrolmonomeren A1 und einem weiteren Monomer A2 eingesetzt wird, beträgt bevorzugt der molare Anteil des mindestens einen Hydroxystyrolmonomers A1, bezogen auf die Gesamtheit des mindestens einen Hydroxystyrolmonomers A1 und des mindestens einen weiteren Monomers A2 im Monomergemisch, von 0,1 bis 99,9 mol-%, bevorzugt von 5 bis 95 mol-%, insbesondere von 20 bis 90 mol-%.

Das mindestens eine Alkoxyamin B1 ist bevorzugt ausgewählt aus Verbindungen mit der nachfolgend abgebildeten allgemeinen Formel

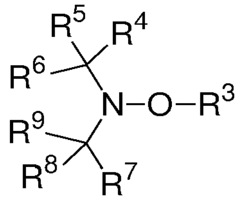

wobei jeweils unabhängig voneinander

$R^3$ eine Gruppe mit mindestens einem Kohlenstoffatom, die in der Lage ist, eine homolytische Spaltung der Bindung zwischen Sauerstoffatom und Rest $R^3$ einzugehen und ein Radikal $\bullet R^3$ zu bilden, wobei der Rest $R^3$ insbesondere ausgewählt ist aus der Gruppe bestehend aus 1-Phenylethyl, t-Butyl, Cyano-i-propyl, Phenyl, Methyl,

$R^4$, $R^5$, $R^7$ und $R^8$ gleich oder verschieden sind und ausgewählt sind aus der Gruppe bestehend aus linearen, verzweigten oder cyclischen und/oder unsubstituierten oder substituierten Alkylresten, wobei die Reste $R^4$, $R^5$, $R^7$ und $R^8$ insbesondere gleich oder verschieden sind und ausgewählt sind aus der Gruppe bestehend aus Methyl, Ethyl, n-Propyl, i-Propyl, n-Butyl, i-Butyl, t-Butyl, Neopentyl, Benzyl, Cyclohexyl, oder die Gruppierungen $R^4$-C-$R^5$ und/oder $R^7$-C-$R^8$ über die Reste $R^4$ und $R^5$ und/oder $R^7$ und $R^8$ eine cyclische Struktur bilden, die ihrerseits substituiert oder unsubstituiert sein kann

$R^6$ und $R^9$ gleich oder verschieden sind und ausgewählt sind aus der Gruppe bestehend aus linearen, verzweigten oder cyclischen und/oder unsubstituierten oder substituierten Alkylresten, oder die Gruppierung $R^6$-C-N-C-$R^9$ über die Reste $R^6$ und $R^9$ eine cyclische Struktur bildet, die ihrerseits substituiert oder unsubstituiert und/oder an ein aliphatisches oder aromatisches Ringsystem anneliert sein kann, wobei die cyclische Struktur insbesondere ausgewählt ist aus Strukturen mit den nachfolgend abgebildeten allgemeinen Formeln

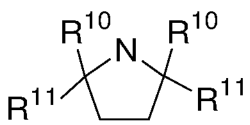 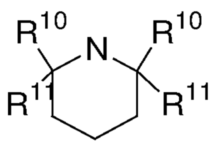 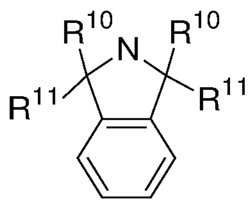

wobei jeweils unabhängig voneinander bei jedem Auftreten

$R^{10}$ und $R^{11}$ gleich oder verschieden sind und ausgewählt ist aus der Gruppe bestehend aus linearen oder verzweigten und/oder unsubstituierten oder substituierten Alkylresten, insbesondere Methyl, Ethyl, n-Propyl, i-Propyl, n-Butyl, i-Butyl, t-Butyl, Neopentyl, Benzyl, Cyclohexyl und Wasserstoff, bedeuten.

Beispielhafte, insbesondere auch für die Zwecke der vorliegenden Erfindung einsetzbare Alkoxyamine B1 sind in Nicolas et. al. in Progress in Polymer Science 38 (2013) 63- 235 beschrieben.

Alternativ oder zusätzlich hierzu kann der mindestens eine Initiator B2 mindestens ein Radikalstarter sein, der bevorzugt ausgewählt ist aus der Gruppe bestehend aus Peroxiden; Azoverbindungen, insbesondere Dibenzoylperoxid,

Cumolhydroperoxid, Dicumylperoxid, 1,1-Di-(t-butylperoxy)cyclohexan, t-Amylperoxyacetat, Diisopropylperoxydicarbonat, Peroxodisulfaten Azobis(isobutyronitril), Peroxodisulfaten; Redox-Systemen und Photoinitiatoren sowie mindestens ein Nitroxylradikal ausgewählt aus der Gruppe bestehend aus Nitroxylradikalen mit der nachfolgend abgebildeten allgemeinen Formel

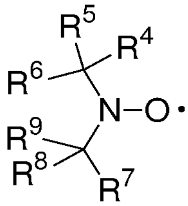

wobei jeweils unabhängig voneinander

$R^4$, $R^5$, $R^7$ und $R^8$ gleich oder verschieden sind und ausgewählt sind aus der Gruppe bestehend aus linearen, verzweigten oder cyclischen und/oder unsubstituierten oder substituierten Alkylresten, wobei die Reste $R^4$, $R^5$, $R^7$ und $R^8$ insbesondere gleich oder verschieden sind und ausgewählt sind aus der Gruppe bestehend aus Methyl, Ethyl, n-Propyl, i-Propyl, n-Butyl, i-Butyl, t-Butyl, Neopentyl, Benzyl, Cyclohexyl, oder die Gruppierungen $R^4$-C-$R^5$ und/oder $R^7$-C-$R^8$ über die Reste $R^4$ und R5 und/oder $R^7$ und $R^8$ eine cyclische Struktur bilden, die ihrerseits substituiert oder unsubstituiert sein kann,

$R^6$ und $R^9$ gleich oder verschieden sind und ausgewählt sind aus der Gruppe bestehend aus linearen, verzweigten oder cyclischen und/oder unsubstituierten oder substituierten Alkylresten, oder die Gruppierung $R^6$-C-N-C-$R^9$ über die Reste $R^6$ und $R^9$ eine cyclische Struktur bildet, die ihrerseits substituiert oder unsubstituiert und/oder an ein aliphatisches oder aromatisches Ringsystem anneliert sein kann, wobei die cyclische Struktur insbesondere ausgewählt ist aus Strukturen mit den nachfolgend abgebildeten allgemeinen Formeln

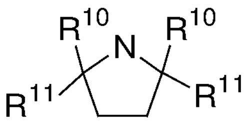

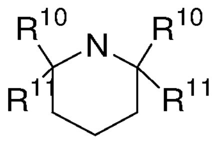

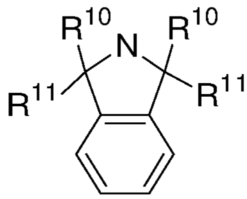

wobei jeweils unabhängig voneinander bei jedem Auftreten

$R^{10}$ und $R^{11}$ gleich oder verschieden sind und ausgewählt ist aus der Gruppe bestehend aus linearen oder verzweigten und/oder unsubstituierten oder substituierten Alkylresten, insbesondere Methyl, Ethyl, n-Propyl, i-Propyl, n-Butyl, i-Butyl, t-Butyl, Neopentyl, Benzyl, Cyclohexyl und Wasserstoff, bedeuten.

Beispielhafte, insbesondere auch für die Zwecke der vorliegenden Erfindung einsetzbare Initiatoren B2 leiten sich von den in Nicolas et. al. in Progress in Polymer Science 38 (2013) 63- 235 beschriebenen Alkoxyaminen ab.

Bezogen auf die Gesamtstoffmenge an Monomeren A1 bzw. im Falle eines Monomerengemischs A1 und A2 wird bevorzugt der Initiator B in einer Menge von 0,1 bis 20 mol-%, besonders bevorzugt in einer Menge von 0,2 bis 10 mol-% und ganz besonders bevorzugt in einer Menge von 1 bis 5 mol-% eingesetzt.

Das mindestens eine reaktive Agens C ist bevorzugt ausgewählt aus der Gruppe bestehend aus substituierten Phenolen, insbesondere 2,6-Di-tert-butyl-p-kresol, Octadecyl-3-(3,5-di-tert-butyl-4-hydroxyphenyl)-propionat, 2,6-Di-tert-butylphenol, Hydrochinon; und nicht homopolymerisierbaren Monomeren, insbesondere Maleinsäureanhydrid oder Isobutylvinylether.

Insbesondere ist es vorteilhaft, wenn das mindestens eine reaktive Agens C in einer Menge von 10 bis 1000 mol-%, bevorzugt von 90 bis 200 mol-% und ganz besonders bevorzugt von 100 bis 150 mol-%, bezogen auf die Konzentration des Initiators B eingesetzt wird.

Das Gemisch, das zur radikalischen Polymerisation eingesetzt wird, beinhaltet bevorzugt ein Lösungsmittel, das insbesondere ausgewählt ist aus der Gruppe bestehend aus PGMEA, Ethylacetat, Toluol, Xylol, Ethylbenzol, Anisol,

Aceton, 2-Butanon, Acetonitril, Dimethylsulfoxid, Tetrahydrofuran, Dioxan, Diethylether, tert-Butylmethylether, Pentan, Hexan, Heptan, Cyclopentan, Cyclohexan, Methanol, Ethanol, n-Propanol, i-Propanol, n-Butanol, t-Butanol, Ethylenglycol, Propylenglycol, Diethylenglycol, Ethylenglycolmonomethylether, Ethylenglycoldimethylether, Diethylenglycolmonomethylether, Diethylenglycoldimethylether, Diethylenglycolmonobutylether sowie Mischungen und Kombinationen hiervon.

Die Initiierung der Polymerisationsreaktion kann thermisch oder aktinisch erfolgen.

Bevorzugt wird zur Initiierung der Polymerisation und/oder zur Aufrechterhaltung der Polymerisationsreaktion eine Temperatur eingestellt, die von 60 bis 180 °C, bevorzugt 90 und 140 °C, besonders bevorzugt 100 und 130 °C beträgt. Die zuvor genannte Temperatur wird insbesondere zur Initiierung der Reaktion verwendet und über die gesamte Dauer der Reaktion aufrechterhalten.

Weiter vorteilhaft ist es, wenn nach Abschluss des Schrittes c) die Schutzgruppe des im Polymerisat gebundenen Hydroxystyrolmonomers A1 abgespalten wird.

Beschrieben wird ebenso ein Polymerisat, das nach einem voranstehend beschriebenen erfindungsgemäßen Verfahren herstellbar ist.

Das Polymerisat zeichnet sich insbesondere durch die folgenden Merkmale aus:

einen bevorzugten mittleren Polymerisationsgrad P im Bereich zwischen 5 und 1000, besonders bevorzugt im Bereich zwischen 10 und 500, ganz besonders bevorzugt im Bereich zwischen 20 und 100,

eine Molekulargewichtsverteilung mit Polydispersitätsindex (PDI) von 1,01 bis 1,50,

die Anwesenheit einer charakteristischen Endgruppe, die der in Schritt c) des Anspruchs 1 erzeugten nicht polymerisationsfähigen Gruppe, insbesondere Wasserstoff entspricht.

Der mittlere Polymerisationgrad kann beispielsweise dadurch bestimmt werden, indem das zahlenmittlere Molekulargewicht, welches man aus einer Standardmethode zur Molekulargewichtsbestimmung, wie beispielsweise der Grö-βenausschlusschromatographie erhält, im Falle eines Homopolymeren des Monomers A1 durch die Molmasse des Monomeren A1 dividiert oder bei einem Copolymeren aus mehreren Monomeren durch eine aus allen Molmassen der eingesetzten Monomeren nach folgender Gleichung gemittelten Molmasse dividiert.

$$\overline{M_g} = \sum x_i \, M_i$$

$M_g$ ist dabei die aus allen Molmassen der eingesetzten Monomeren gemittelte Molmasse, $x_i$ ist der Molenbruch des im Polymer eingebauten Monomeren i und $M_i$ ist die Molmasse des im Polymeren eingebauten Monomeren i.

Der PDI wird mit der Gelpermeationschromotographie (GPC) bestimmt, indem man aus dem Elugramm nach Kalibration der Methode (entweder mit entsprechenden Standards oder mit Lichtstreuung) die Werte für Mw und Mn ermittelt. Durch Division von Mw durch Mn erhält man den PDI.

Für die Bestimmung des zahlenmittleren (Mn) und des gewichtsmittleren Molekulargewichtes (Mw) wird vorzugsweise eine Lösung des Polymers in Tetrahydrofuran (2 mg/mL) mit Tetrahydrofuren über einen GPC-Säulensatz der Firma Polymer Standards Service GmbH (Mainz) bestehend aus den Typen SDV 1000, SDV 100.000 und SDV 1.000.000 eluiert. Die Elutionszeit wird mit einem UV-Detektor ermittelt. Mit Hilfe einer zuvor durchgeführten Kalibration der Methode mit Polystyrolstandards und durch Auswertung mit der Software PSS WinGPC Unity (Polymer Standards Service GmbH, Mainz) werden aus der elutionsvolumenabhängigen Signalintensität des UV-Detektors die Werte für das zahlenmittlere und das gewichtsmittlere Molekulargewicht sowie den Polydispersitätsindex ermittelt.

Bevorzugt ist die Anwesenheit einer charakteristischen Startgruppe, die der Gruppe $R^3$ in den oben im Zusammenhang mit den Initiatoren beschriebenen allgemeinen Formeln entspricht. Insbesondere handelt es sich hierbei um Wasserstoff.

Weiter vorteilhaft ist das Polymerisat dadurch gekennzeichnet, dass sein Molekulargewicht durch Erhitzen auf eine Temperatur zwischen 100 °C und 130°C für einen Zeitraum zwischen 15 Minuten und 180 Minuten unverändert erhalten bleibt.

Grundsätzlich können die mit dem erfindungsgemäßen Verfahren hergestellten Polymere als Formmassen für alle möglichen Kunststoffanwendungen zum Einsatz kommen.

Grundsätzlich hat das Verfahren dort Vorteile, wo Polymere mit enger Molekulargewichtsverteilung oder spezieller Polymerarchitektur (z.B. Blockcopolymere, Sternpolymere) gefordert sind. Enge Molekulargewichtsverteilungen werden beispielsweise bei Bindern in Fotolacken, Verkapselung von Wirkstoffen zur deren definierten Freisetzung, bei Schmelzklebstoffen oder Kalibrationsstandards benötigt. Anwendungen für spezielle Polymerarchitekturen sind Thermoplastische Elastomere, Tenside bzw. Dispergiermittel, Schaumstabilisatoren oder Phasenvermittler für Polymerblends.

Die wichtigste technische Anwendung für Polyhydroxystyrol mit enger Molekulargewichtsverteilung ist dessen Einsatz als Binder in Fotolacken.

Andere Anwendungen für Poly(4-hydroxystyrol) sind die Verwendung als Beschichtung (Coating) wie z.B. als Haftvermittler (z.B. in Hot Melts), als Film oder Folie sowie als Additiv in Kunststoffen wie z.B. als als Antioxidans oder Flammschutzmittel in Kunststoffanwendungen. Bei diesen Anwendungen werden jedoch keine so hohen Ansprüche an das Molekulargewicht und die Molekulargewichtsverteilung gestellt. Darüber hinaus werden diese Produkte wesentlich preiswerter als Binder für Fotolacke verkauft, so dass Produkte, die mit dem hier beschriebenen Verfahren hergestellt wurden, nicht konkurrenzfähig wären.

Eine weitere bevorzugte Anwendung der erfindungsgemäß hergestellten Hydroxystyrole sind Polymerwerkstoffe, die für die generative Fertigung ("Additives Manufacturing")-Verfahren eingesetzt werden, wie z.B. dem 3D-Druck.

Je nach Einsatzzweck können den erfindungsgemäß hergestellten Polyhydroxystyrolen Additive zugegeben werden, um bestimmte gewünschte Eigenschaften in Verarbeitungsprozessen zu erreichen.

Diese Zusatzstoffe werden insbesondere ausgewählt aus der Gruppe bestehend aus UV-Absorber, der Lichtstabilisatoren, der Stabilisatoren, der Hydroxylamine, der Benzofuranone, der Metalldesaktivatoren, der Füllstoffdesaktivatoren, der Flammschutzmittel, Schlagzähigkeitsverbesserer, Haftvermittler Weichmacher, Gleitmittel, Rheologiemodifikatoren, Verarbeitungshilfsmittel, Verlaufsmittel, Pigmente, Farbstoffe, Füllstoffe, Verstärkungsstoffe, optische Aufheller, antimikrobielle Wirkstoffe, Antistatika, Slipmittel, Antiblockmittel, Kopplungsmittel, Dispergiermittel, Kompatibilisatoren, Sauerstofffänger, Säurefänger, Markierungsmittel, Antifoggingmittel sowie Mischung und Kombinationen aus mindestens zwei der zuvor genannten Zusatzstoffen.

Für eine Anwendung als Beschichtung oder Film werden vorzugsweise Additive aus der Gruppe der UV-Absorber, Lichtschutzmittel, der Stabilisatoren, der Weichmacher, Verlaufsmittel, Gleitmittel, optischen Aufheller, Farbstoffe und/oder Pigmente eingesetzt.

Geeignete Licht- und UV-Stabilisatoren sind beispielsweise Verbindungen auf der Basis von Benzotriazolen, Benzophenonen, Hydroxyphenyltriazinen, Oxamiden oder sterisch gehinderte Amine sog. HALS-Verbindunge.. Geeignete Stabilisatoren sind insbes. phenolische Antioxidantien, Phosphite, Phosphonite, Hydroxylamine, N-oxide (Nitrone), Thioether oder Disulfide.

Geeignete Weichmacher sind beispielsweise langkettige Ester der Phthalsäure, der Adipinsäure oder der Sebazinsäure.

Geeignete Verlaufsmittel sind beispielsweise fluormodifizierte Polyacrylate oder silikonmodifizierte Akrylate.

Geeignete Gleitmittel sind z.B. Wachse wie Montanwachse oder Salze langkettiger Fettsäuren wie Calcium- oder Zinkstearat.

Optische Aufheller sind beispielsweise Bisbenzoxazole, Phenylcumarine oder Bis(styryl)biphenyle.

Geeignete Farbstoffe und Pigmente können anorganischer oder organischer Natur sein. Geeignete anorganische Pigmente sind beispielsweise Titandioxid, Zinkoxid, Zinksulfid, Eisenoxid, Ultramarin, Ruß. Geeignete organische Pigmente und Farbstoffe sind beispielsweise Anthrachinone, Anthanthrone, Benzimidazolone, Chinacridone, Chinophthalone, Diketopyrrolopyrrole, Dioxazine, Flavanthrone, Indanthrone, Isoindoline, Isoindolinone, Azo-Verbindungen, Naphthole, Perinone, Perylene, Phthalocyanine oder Pyranthrone. Weitere geeignete Pigmente sind Effektpigmente auf Metallbasis oder Perlglanzpigmente auf Metalloxid-Basis.

Photolacke auf der Basis der erfindungsgemäß hergestellten Hydroxystyrole enthalten bevorzugt ein Lösungsmittel, einen (Photo-)Sensibilisator oder Säureerzeuger und ein Verlaufsmittel.

Die vorliegende Erfindung wird anhand der nachfolgenden Ausführungen näher erläutert, ohne die Erfindung auf die speziell dargestellten Sachverhalte zu beschränken.

Als Monomere werden 4-Hydroxystyrolderivate verwendet, deren OH-Gruppe mit einer Schutzgruppe versehen ist. Gegebenenfalls können Comonomere eingesetzt werden. In den nachfolgend beschriebenen Ausführungsbeispielen wird 4-Acetoxystyrol homopolymerisiert oder mit Styrol copolymerisiert. Als Polymerisationsverfahren wird die Nitroxyl-kontrollierte radikalische Polymerisation verwendet. Die Initiierung erfolgt dabei unimolekular mit einem Alkoxyamin, bei dem es sich in den hier gezeigten Beispielen um (2,2,6,6-Tetramethyl-1-(1-phenylethoxy)piperidin (EBTEMPO), dem Addukt aus Ethylbenzol und 2,2,6,6-Tetramethylpiperidin-N-oxid (TEMPO) handelt.

Die Polymerisation wird dabei in Anwesenheit von Essigsäureanhydrid als Beschleuniger durchgeführt. Dieser bewirkt, wie in der Literatur beschrieben beschleunigend auf die Polymerisation und erfindungsgemäß auch auf die Endgruppensubstitutionsreaktion. Nach gewünschtem Umsatz wird zum Abbruch der Polymerisation und zur Substitution der Alkoxyaminendgruppen durch eine inerte Gruppe ein gegenüber dem radikalischen Kettenende reaktives Agens zugegeben, das nach Übertragung der inerten Gruppe auf das radikalische Kettenende nicht in der Lage ist, eine neue Polymerisation zu starten. Phenolderivate haben sich hierfür als geeignet erwiesen. In den Ausführungsbeispielen wurde hierfür 2,6-Di-tert-butyl-p-kresol (BHT) verwendet. Die Endgruppensubstitution wird dabei in einer Eintopfreaktion im Polymerisationsgemisch durchgeführt.

Vergleichsbeispiel 1. Polymerisation ohne Endgruppensubstitution und anschließende Hydrolyse

In diesem Vergleichsbeispiel wurde 4-Acetoxystyrol mit Styrol mit der NMP copolymerisiert und das daraus entstehende Polymerisat ohne vorherige Substitution der zur Polymerisation befähigten Endgruppen zu Poly(4-hydroxystyrolco-styrol) hydrolysiert. Die Polymerisationsreaktion wurd dafür durch Absenken der Temperatur auf Raumtemperatur abgebrochen. Die Bestimmung der Molekulargewichte und deren Verteilungen vor und nach der Hydrolyse demonstriert, dass die Breite der Molekulargewichtsverteilung durch die Hydrolyse erhöht wurde.

a) Polymerisation

In einem 2L Doppelmantelreaktor mit Rührer, Tropftrichter und Stickstoffzuleitung werden 750 mL (4,36 mol) entstabilisiertes 4-Acetoxystyrol und 166 mL (1,45 mol) Styrol vorgelegt. 72,4 g (0.28 mol) EBTEMPO, 100 mL Methoxy-2-propylacetat (PGMEA) und 79 mL (0,83 mol) Essigsäureanhydrid werden in 100 mL der Monomermischung gelöst, durch Einleiten von Stickstoff entgast und in den Tropftrichter gefüllt. Die restliche Monomermischung wird ebenfalls durch Einleiten von Stickstoff entgast. Nach Aufheizen der Monomermischung auf 130°C wird die Initiatormischung in den Reaktor gegeben und für 6h bei 130°C gerührt. Während des Abkühlens auf Raumtemperatur wird die Mischung mit 1L Toluol verdünnt und nach Erreichen der Raumtemperatur wird das Polymer in 12L eines Gemisches aus Methanol und Wasser (5:1) ausgefällt. Das Polymer wird filtriert und bis zur Gewichtskonstanz bei 60°C im Vakuum getrocknet.

b) Hydrolyse

15 g Poly(4-acetoxystyrol-co-styrol) aus a) werden in 150mL Methanol dispergiert und durch Einleiten von Stickstoff entgast. Das Gemisch wird mit 1,05 mL Methansulfonsäure versetzt und unter Stickstoff über Nacht bei Raumtemperatur gerührt, wobei das Polymer im Laufe der Reaktion in Lösung geht. Das Produkt wird anschließend in Wasser gefällt und filtriert. Der Rückstand wird in Ethylacetat gelöst und zweimal mit Wasser extrahiert. Durch abschließende Fällung in Hexan wird das Polymer isoliert.

c) Charakterisierung

Die Molekulargewichtsverteilungen der in a) und b) hergestellten Copolymere wurden mit der Größenausschlusschromatographie (GPC) untersucht (Tab. 1).

Tab. 1. Zahlenmittlere und gewichtsmittlere Molekulargewichte sowie Polydispersitäten der in Vergleichsbeispiel 1 a) und 1b) hergestellten Polymere, gemessen mit der GPC (Polystyrol-Kalibration).

| Polymer | Mn [kDa] | Mw [kDa] | PDI |
|---|---|---|---|
| vor Hydrolyse (Poly(4-Acetoxystyrol-co-styrol) aus Vergleichsbeispiel 1a)) | 1,99 | 2,54 | 1,28 |
| nach Hydrolyse (Poly(4-Hydroxystyrol-co-styrol) aus Vergleichsbeispiel 1b)) | 1,68 | 2,43 | 1,45 |

Aus Tab. 1 ist zu entnehmen, dass die mittleren Molekulargewichte nach der Hydrolyse kleiner sind als davor. Das ist dadurch bedingt, dass die Molmasse durch Abspaltung der Acetatgruppen geringer wird. Zusätzlich ist in Tab. 1 zu erkennen, dass nach der Hydrolyse die Breite der Molekulargewichtsverteilung deutlich zunimmt (Polydispersitätsindex vor Hydrolyse = 1,28; nach Hydrolyse = 1,45), was darauf zurückzuführen ist, dass die Alkoxyaminendgruppen während der Hydrolyse Nebenreaktionen eingehen, die zu Kopplungsprodukten der Polymerketten untereinander mit höherem Molekulargewicht führen, was für eine mögliche Anwendung als Binder in Fotolacken unerwünscht ist.

Erfindungsgemäßes Beispiel 1: Beschleunigte Endgruppensubstitution und anschließende Hydrolyse

In einem ersten erfindungsgemäßen Beispiel wurden von dem in Vergleichsbeispiel 1a) hergestellten Poly(4-acetoxystyrol-co-styrol) die zur Polymerisation befähigten Alkoxyaminendgruppen in Anwesenheit eines die Polymerisation beschleunigenden Additivs durch ein Wasserstoffatom ersetzt. Das endgruppensubstituierte Polymer wurde anschließend zu Poly(4-hydroxystyrol-co-styrol) hydrolysiert. Die Bestimmung der Molekulargewichte und deren Verteilungen vor und nach der Hydrolyse demonstriert, dass die Breite der Molekulargewichtsverteilung durch die Hydrolyse nicht verändert wurde.

a) Endgruppensubstitution

20 g des in Vergleichsbeispiel 1a) hergestellten Polymers werden in 40 mL PGMEA mit 2,6 g (0,016 mol) BHT und 2,27 g (0,022 mol) Essigsäureanhydrid gelöst. Die Lösung wird durch Einleiten von Stickstoff entgast. Das Reaktionsgemisch wird für 2 h bei 130°C gerührt, wobei es zu einer orange-roten Färbung der Lösung kommt, die die Freisetzung des TEMPO anzeigt. Nach Abkühlen auf Raumtemperatur wird das Polymer in Hexan gefällt und filtriert.

b) Hydrolyse

15 g Poly(4-acetoxystyrol-co-styrol) aus erfindungsgemäßem Beispiel a) werden in 150mL Methanol dispergiert und durch Einleiten von Stickstoff entgast. Das Gemisch wird mit 1,05 mL Methansulfonsäure versetzt und unter Stickstoff über Nacht bei Raumtemperatur gerührt, wobei das Polymer im Laufe der Reaktion in Lösung geht. Das Produkt wird anschließend in Wasser gefällt und filtriert. Der Rückstand wird in Ethylacetat gelöst und zweimal mit Wasser extrahiert. Durch abschließende Fällung in Hexan wird das Polymer isoliert.

c) Charakterisierung

Die Molekulargewichtsverteilungen der in a) und b) hergestellten Copolymere wurden mit der Größenausschlusschromatographie (GPC) untersucht (Tab. 2).

Tab. 2. Zahlenmittlere und gewichtsmittlere Molekulargewichte sowie Polydispersitäten der in erfindungsgemäßem Beispiel 1a) und 1b) hergestellten Polymere, gemessen mit der GPC (Polystyrol-Kalibration).

| Polymer | Mn [kDa] | Mw [kDa] | PDI |
|---|---|---|---|
| vor Hydrolyse (Poly(4-Acetoxystyrol-co-styrol) aus erfindungsgemäßem Beispiel 1a)) | 2,11 | 2,62 | 1,24 |
| nach Hydrolyse (Poly(4-Hydroxystyrol-co-styrol) aus erfindungsgemäßem Beispiel 1b)) | 1,77 | 2,21 | 1,25 |

AusTab. 2 ist zu entnehmen, dass - wie bereits in Vergleichsbeispiel 1 beobachtet - die mittleren Molekulargewichte nach der Hydrolyse kleiner sind als davor. Anders als in Vergleichsbeispiel 1 ist nach der Hydrolyse lediglich eine zu vernachlässigende Verbreiterung der Verteilung zu beobachten, die im Bereich der Messungenauigkeit liegt.

Vergleichsbeispiel 2. Unbeschleunigte Endgruppensubstitution

In einem zweiten Vergleichsbeispiel wurden erneut 4-Acetoxystyrol und Styrol mit der NMP copolymerisiert. Zur Entfernung des bei der Polymerisation anwesenden Beschleunigers wurde das Polymers durch Ausfällen isoliert. Anschließend wurden in einem nachgeschalteten Schritt die die zur Polymerisation befähigten Alkoxyaminendgruppen durch ein Wasserstoffatom substituiert. Anders als in erfindungsgemäßem Beispiel 1 wurde in diesem Vergleichsbeispiel kein die Polymerisation beschleunigendes Additiv der Substitutionsreaktion zugegeben. Der Fortschritt der Substitutionsreaktion wurde mit der NMR-Spektroskopie bestimmt.

a) Polymerisation

In einem 2L Doppelmantelreaktor mit Rührer, Tropftrichter und Stickstoffzuleitung werden 750 mL (4,36 mol) entstabilisiertes 4-Acetoxystyrol und 125 mL (1,09 mol) Styrol vorgelegt. 71,27 g (0.27 mol) EBTEMPO, 100 mL Methoxy-2-propylacetat (PGMEA) und 77 mL (0,82 mol) Essigsäureanhydrid werden in 100 mL der Monomermischung gelöst, durch Einleiten von Stickstoff entgast und in den Tropftrichter gefüllt. Die restliche Monomermischung wird ebenfalls durch Einleiten von Stickstoff entgast. Nach Aufheizen der Monomermischung auf 130°C wird die Initiatormischung in den Reaktor gegeben und für 6h bei 130°C gerührt. Während des Abkühlens auf Raumtemperatur wird die Mischung mit 1L Toluol verdünnt und nach Erreichen der Raumtemperatur wird das Polymer in 12L eines Gemisches aus Methanol und Wasser (5:1) ausgefällt. Das Polymer wir filtriert und bis zur Gewichtskonstanz bei 60°C unter Vakuum getrocknet.

b) Endgruppensubstitution

5 g des in a) erhaltenen Polymers werden in 10 ml PGMEA gelöst. Es werden 2 Äquivalente BHT zugegeben und die Reaktionsmischung durch Einleiten von Stickstoff entgast. Anschließend wird die Reaktionsmischung unter

Rühren für 6 h auf 130 °C erhitzt. Eine Orangerotfärbung des Reaktionsgemischs zeigt dabei die Freisetzung des persistenten TEMPO-Radikals an. Nach 2 h wird dem Gemisch zur Bestimmung des Anteils an verbliebenen Alkoxyaminendgruppen eine Probe entnommen. Das Polymer wird durch Ausfällen in Hexan isoliert.

c) Charakterisierung

Mit der Protonen-NMR-Spektroskopie wird die Substitution der Alkoxyamingruppe untersucht. Die ermittelten prozentualen Anteile an Endgruppen, bezogen auf die Zahl der Polymerketten, sind in Tab 3 aufgelistet.

Tab 3. Prozentuale Anteile an Alkoxyaminendgruppen (bezogen auf Anzahl der Polymerketten) des aus Vergleichsbeispiel 2 hervorgegangenen Polymers: während der Endgruppensubstitution mit und ohne Beschleunigung nach 2h und 6h Reaktionszeit

| | nach 2h Reaktionszeit | nach 6h Reaktionszeit |
|---|---|---|
| Prozentuale Anteile an Alkoxyaminendgruppen im Polymer bei der Endgruppen-substitution ohne Beschleunigung (Vergleichswbeispiel 2) | 47% | 2% |

Aus Tab 3 ist zu entnehmen, dass die Endgruppen bei der nicht beschleunigten Substitutionsreaktion nach 2h noch 47 % betragen und selbst nach 6h Reaktionszeit noch 2% der Alkoxyaminendgruppen am Polymer verbleiben. Weiterhin waren im Protonen-NMR-Spektrum des Polymers Signale im Bereich zwischen 1,3 und 1,5 ppm zu erkennen, die nicht dem gewünschten Polymer zuzuordnen waren (nicht näher identifizierbare Verunreinigungen).

Erfindungsgemäßes Beispiel 2. Demonstration der beschleunigten Endgruppensubstitution.

In einem zweiten erfindungsgemäßen Beispiel wird demonstriert, dass die Zugabe eines Beschleunigers nicht nur die Polymerisation sondern auch die Endgruppensubstitution beschleunigt. Zusätzlich wird demonstriert, dass durch die Beschleunigung der Endgruppensubstitution die Bildung von Nebenreaktionen reduziert werden kann. Um diesen Effekt sichtbar zu machen, wurde das 4-Acetoxystyrol aus Vergleichsbeispiel 2a) als Ausgangsmaterial verwendet. Von diesem wurden in einem nachgeschalteten Schritt die die zur Polymerisation befähigten Alkoxyaminendgruppen durch ein Wasserstoffatom substituiert. Zur Beschleunigung der Substitutionsreaktion wurde Essigsäureanhydrid zugegeben. Der Fortschritt der Substitutionsreaktion wurde mit der NMR-Spektroskopie bestimmt.

a) Endgruppensubstitution

5 g des in Vergleichsbeispiel 2a) erhaltenen Polymers werden in 10 ml PGMEA gelöst. Es werden 2 Äquivalente BHT sowie 3 Äquivalente Essigsäureanhydrid, bezogen auf die Initiatorkonzentration, zugegeben und die Reaktionsmischung wird durch Einleiten von Stickstoff entgast. Anschließend wird die Reaktionsmischung unter Rühren auf 130 °C erhitzt. Das Reaktionsgemisch wird nach 2h auf Raumtemperatur abgekühlt. Eine Orangerotfärbung der Reaktionsgemische zeigt dabei die Freisetzung des persistenten TEMPO-Radikals an. Das Polymer werden durch Ausfällen in Hexan isoliert.

b) Charakterisierung

Mit der Protonen-NMR-Spektroskopie wird die Substitution der Alkoxyamingruppe untersucht. Der ermittelte prozentualen Anteil an Endgruppen, bezogen auf die Zahl der Polymerketten, ist in Tab 4 aufgeführt.

Tab 4. Prozentuale Anteile an Alkoxyaminendgruppen (bezogen auf Anzahl der Polymerketten) der aus Erfindungsgemäßem Beispiel 2a) hervorgegangenen Polymere nach 2h und 6h Reaktionszeit.

| | nach 2h Reaktionszeit | nach 6h Reaktionszeit |
|---|---|---|
| Prozentuale Anteile an Alkoxyaminendgruppen im Polymer bei der Endgruppen-substitution mit Beschleunigung (Erfindungsgemäßes Beispiel 2) | 0% | - |

Aus Tab 4 ist zu entnehmen, dass die Endgruppen bei der beschleunigten Substitution bereits nach 2h quantitativ entfernt wurden. Weiterhin waren im Protonen-NMR-Spektrum des Polymers keine Signale im Bereich zwischen 1,3

und 1,5 ppm zu erkennen, die nicht dem gewünschten Polymer zuzuordnen waren.

Erfindungsgemäßes Beispiel 3: Demonstration der verbesserten Temperaturstabilität bei Endgruppensubstitution als Eintopfreaktion

In einem zweiten erfindungsgemäßen Beispiel wird verdeutlicht, dass es vorteilhaft ist, die Endgruppensubstitution in einer Eintopfreaktion durchzuführen. Hierzu wurde ein weiteres Polymer nach dem gleichen Verfahren wie in den zuvor beschriebenen Beispielen hergestellt, mit dem Unterschied, dass hier die Endgruppensubstitution als Eintopfreaktion durchgeführt wurde, wobei das die Polymerisation beschleunigende Agens auch während der Endgruppensubstitution noch anwesend war. Auch dieses Polymer wurde wie in Vergleichsbeispiel 1b) und erfindungsgemäßem Beispiel 1b) beschrieben hydrolysiert. Als weiterer Charakterisierungsschritt kam hier noch ein Temperaturstabilitätstest hinzu.

a) Polymerisation und Endgruppensubstitution

In einem 2L Doppelmantelreaktor mit Rührer, Tropftrichter und Stickstoffzuleitung werden 750 mL (4,36 mol) entstabilisiertes 4-Acetoxystyrol und 166 mL (1,45 mol) Styrol vorgelegt. 72,4 g (0.28 mol) EBTEMPO, 100 mL Methoxy-2-propylacetat (PGMEA) und 79 mL (0,83 mol) Essigsäureanhydrid werden in 100 mL der Monomermischung gelöst, durch Einleiten von Stickstoff entgast und in den Tropftrichter gefüllt. Die restliche Monomermischung wird ebenfalls durch Einleiten von Stickstoff entgast. Nach Aufheizen der Monomermischung auf 130°C wird die Initiatormischung in den Reaktor gegeben und für 6h bei 130°C gerührt. Nach 6h werden dem Reaktionsgemisch 102g (0,46 mol) BHT, gelöst in 100 mL PGMEA zugegeben. Nach weiteren 2h Rühren bei 130°C wird auf Raumtemperatur abgekühlt. Während des Abkühlens wird die Mischung mit 1L Toluol verdünnt und nach Erreichen der Raumtemperatur wird das Polymer in 12L eines Gemisches aus Methanol und Wasser (5:1) ausgefällt. Das Polymer wird filtriert und bis zur Gewichtskonstanz bei 60°C unter Vakuum getrocknet.

b) Hydrolyse

15 g des in a) hergestellten Poly(4-acetoxystyrol-co-styrol) werden in 150mL Methanol dispergiert und durch Einleiten von Stickstoff entgast. Das Gemisch wird mit 1,05 mL Methansulfonsäure versetzt und unter Stickstoff über Nacht bei Raumtemperatur gerührt, wobei das Polymer im Laufe der Rektion in Lösung geht. Das Produkt wird anschließend in Wasser gefällt und filtriert. Der Rückstand wird in Ethylacetat gelöst und zweimal mit Wasser extrahiert.
Durch abschließende Fällung in Hexan wird das Polymer isoliert.

c) Temperaturstabilitätstest

Vergleichend werden in diesem Test das Polymer aus b) sowie das Polymer aus erfindungsgemäßem Beispiel 1b) nach separater Endgruppensubstitution untersucht. Die Polymere werden dazu in Festsubstanz für 3h auf 130°C unter Luftatmosphäre in einem Ofen erhitzt. Nach Abkühlen auf Raumtemperatur werden von beiden Proben die Molekulargewichtsverteilungen mit der GPC bestimmt und mit denen vor dem Temperaturstabilitätstest verglichen.

Tab. 5. Veränderung der Molekulargewichtsverteilung von 4-Hydroxystyrol-Styrol-Copolymeren durch Erhitzen für 3h auf 130°C, gemessen mit der GPC (Polystyrol-Kalibration) in Abhängigkeit der Methode der Endgruppensubstitution.

| Methoden der Endgruppensubstitution | Molekulargewichtsverteilung nach Erhitzen für 3 Stunden auf 130°C |
|---|---|
| nachträglich substituiert (erfindungsgemä-ßes Beispiel 1b)) | Schulter im Bereich zwischen 4000 g/mol und 9000 g/mol |
| in-situ substituiert (erfindungsgemäßes Beispiel 3b) | Keine Veränderung |

Aus Tab. 5 ist zu entnehmen, dass bei der Probe, bei der die Endgruppen in einem der Polymerisation nachgeschalteten Prozessschritt substituiert wurden, beim nachträglichen Erhitzen für 3h auf 130°C zur Prüfung der Temperaturstabilität eine hochmolekulare Fraktion entsteht, die als Schulter zwischen 4000 g/mol und 9000 g/mol deutlich wird. Bei der Probe, bei der die Endgruppensubstitution als Eintopfreaktion durchgeführt wurde, ist diese Schulter nicht zu erkennen. Das bedeutet, dass offensichtlich vor oder während der Endgruppensubstitution als nachgeschaltetem Prozess Nebenreaktionen zu solchen Spezies auftreten, die erst bei einem nachträglich durchgeführten Temperaturstabilitätstest eine Molekulargewichtsverbreiterung verursachen. Diese Nebenreaktionen können beispielsweise während dem Abkühlen des Polymerisationsgemisches auftreten, wenn weiterhin durch Dissoziation der Alkoxyaminendgruppen intermediär Radikale gebildet werden, diese aber kein Monomer als Reaktionspartner finden.

Erfindungsgemäßes Beispiel 4: Demonstration der beschleunigten Endgruppensubstitution und der daraus resultierenden verbesserten Temperaturstabilität in einer Eintopfreaktion

Im vierten erfindungsgemäßen Beispiel wird gezeigt, dass auch in einer Eintopfreaktion die Substitution der zur Polymerisation befähigten Endgruppen schneller in Anwesenheit eines die Polymerisation beschleunigenden Additivs abläuft als in dessen Abwesenheit. Zusätzlich wird demonstriert, dass die daraus resultierenden Endprodukte eine verbesserte Temperaturbeständigkeit haben als solche, deren Endgruppen unbeschleunigt in einer Eintopfreaktion substituiert wurden. Um eine unbeschleunigte Endgruppensubstitution durchführen zu können, war es nötig, bereits die Polymerisation ohne beschleunigendes Additiv durchzuführen, weshalb in diesem Beispiel die Polymerisationszeit länger war als in den zuvor gezeigten Beispielen. Hierzu wurde eine Copolymerisation von 4-Hydroxystyrol und Styrol ohne Zugabe eines Beschleunigers durchgeführt und das Reaktionsgemisch wurde nach vollständigem Umsatz der Monomere in zwei Fraktionen geteilt. Zur ersten Fraktion wurde bei Reaktionstemperatur ein beschleunigendes Additiv sowie ein Additiv, dass die polymerisationsfähigen Endgruppen durch Wasserstoffatome ersetzt, zugegeben. Zur zweiten Fraktion wurde nur das Additiv, dass die polymerisationsfähigen Endgruppen durch Wasserstoffatome ersetzt, zugegeben. Beide Fraktionen wurden anschließend zu den Poly-4-hydroxystyrol-Copolymeren hydrolysiert und final einem Temperaturstabilitätstest unterzogen.

a) Polymerisation

In einem 50 mL Rundkolben mit Magnetrührstäbchen, Septum und Stickstoffzuleitung werden 15 mL (98,1 mmol) entstabilisiertes 4-Acetoxystyrol und 2,2 mL (19,2 mmol) Styrol, 1,209 g (4,69 mmol) EBTEMPO und 2 mL Methoxy-2-propylacetat (PGMEA) vorgelegt und durch Einleiten von Stickstoff entgast. Der Rundkolben wird in einem auf 130°C vorgeheizten Ölbad platziert und die Mischung wird bei 130°C gerührt, bis im $^1$H-NMR-Spektrum des Gemisches keine Monomere mehr nachgewiesen werden können (nach 48 h). Nach dieser Zeit wird die Hälfte des Reaktionsgemisches entfernt und unter Stickstoff in einen zweiten auf 130°C vorgeheizten Rundkolben gegeben und mit 3,2 g Irganox 1076 versetzt (Fraktion II). Dem Gemisch im ursprünglichen Kolben (Fraktion I) werden 1,2 mL (12,7 mmol) Essigsäureanhydrid sowie 3,2 g Irganox 1076 zugegeben. Beide Reaktionsmischungen werden bei 130°C gerührt, bis im $^1$H-NMR-Spektrum keine reaktiven Endgruppen mehr identifiziert werden können (Tab. 6).

Tab 6. Prozentuale Anteile an Alkoxyaminendgruppen (bezogen auf Anzahl der Polymerketten) der aus erfindungsgemäßem Beispiel 4a) hervorgegangenen Polymere: während der Endgruppensubstitution mit und ohne Beschleunigung nach 2h und 7h Reaktionszeit

| | nach 2h Reaktionszeit | nach 7h Reaktionszeit |
|---|---|---|
| Prozentuale Anteile an Alkoxyaminendgruppen im Polymer bei der Endgruppensubstitution mit Beschleunigung (Fraktion I) | 0% | - |
| Prozentuale Anteile an Alkoxyaminendgruppen im Polymer bei der Endgruppensubstitution ohne Beschleunigung (Fraktion II) | 45 % | 0% |

Fraktion I wird gemäß der Ergebnisse in Tab. 6 nach 2 h und Fraktion II nach 7 h auf Raumtemperatur abgekühlt. Beide Reaktionsgemische werden mit jeweils 10 mL Ethylacetat verdünnt und in n-Heptan ausgefällt. Die Polymere werden filtriert und bis zur Gewichtskonstanz bei 60°C unter Vakuum getrocknet.

a) Hydrolyse

Je 5 g der in a) hergestellten Poly(4-acetoxystyrol-co-styrole) werden in 50mL Methanol dispergiert und durch Einleiten von Stickstoff entgast. Die Gemische werden mit 0,35 mL Methansulfonsäure versetzt und unter Stickstoff über Nacht bei Raumtemperatur gerührt, wobei die Polymer im Laufe der Rektion in Lösung gehen. Die Produkte werden anschließend in Wasser gefällt und filtriert. Der Rückstände werden in Ethylacetat gelöst und zweimal mit Wasser extrahiert.

Durch abschließende Fällung in Hexan werden die Polymere isoliert.

b) Temperaturstabilitätstest

Die hydrolysierten Polymere der Fraktion I und Fraktion II werden in Festsubstanz für 3h auf 130°C unter Luftatmosphäre in einem Ofen erhitzt. Nach Abkühlen auf Raumtemperatur werden von beiden Proben die zahlenmittlere Molekulargewichte mit der GPC bestimmt und mit denen vor dem Temperaturstabilitätstest verglichen (Tab. 7).

Tab. 7. Zahlenmittlere Molekulargewichte der in Erfindungsgemäßem Beispiel 4 hergestellten Polymere vor und nach Temperaturstabilitätstest, gemessen mit der GPC (Polystyrol-Kalibration).

| Polymer | | Mn [kDa] | Zunahme |
|---|---|---|---|
| Endgruppen beschleunigt substituiert (Fraktion I aus erfindungsgemäßem Beispiel 4 nach Hydrolyse) | vor Erhitzen | 1,89 | |
| | nach Erhitzen auf 130°C für 3h | 2,01 | 6,4 % |
| Endgruppen unbeschleunigt substituiert (Fraktion II aus erfindungsgemäßem Beispiel 4 nach Hydrolyse) | vor Erhitzen | 2,27 | |
| | nach Erhitzen auf 130°C für 3h | 2,70 | 18,9 % |

Aus Tabelle 6 geht hervor, dass auch in einer Eintopfreaktion die Substitution der zur Polymerisation befähigten Endgruppen schneller in Anwesenheit eines die Polymerisation beschleunigenden Additivs abläuft als in dessen Abwesenheit. In Fraktion I, die ein beschleunigendes Additiv enthält sind bereits nach 2 h alle Endgruppen substituiert, während dies in Fraktion II ohne Beschleuniger erst nach 7 h der Fall ist.

Zusätzlich kann Tab. 7 entnommen werden, dass die aus der beschleunigten Endgruppensubstitution hervorgehenden Endprodukte eine verbesserte Temperaturbeständigkeit haben als solche, deren Endgruppen unbeschleunigt substituiert wurden. Das zahlenmittlere Molekulargewicht des aus Fraktion I (mit Beschleuniger) hervorgehenden Polymers nimmt durch den Temperaturstabilitätstest lediglich um 6 % zu, während das aus Fraktion II (ohne Beschleuniger) hervorgehende Polymer eine Molekulargewichtszunahme von fast 19 % durch Erhitzen für 3 h auf 130°C verzeichnet.

Erfindungsgemäßes Beispiel 5: Demonstration der verbesserten Temperaturstabilität bei beschleunigter Endgruppensubstitution in einer Eintopfreaktion im direkten Vergleich zu einer beschleunigten und einer unbeschleunigten Endgruppensubstitution nach vorheriger Isolierung des Polymerisates.

In einem fünften erfindungsgemäßen Beispiel wird demonstriert, dass die Überführung der Alkoxyamin-Endgruppen in nicht polymerisationsfähige Gruppen in Anwesenheit eines die Polymerisation und damit auch die Endgruppensubstitution beschleunigenden Additivs, ohne dabei das Polymerisat zwischen Polymerisation und Endgruppensubstitution zu isolieren zu einem Polymer mit verbesserter Temperaturstabilität führt.

Hierzu wurde eine Copolymerisation von 4-Hydroxystyrol und Styrol in anwesenheit eines Beschleunigers durchgeführt und das Reaktionsgemisch wurde nach vollständigem Umsatz der Monomere in drei Fraktionen geteilt. Zur ersten Fraktion wurde bei Reaktionstemperatur ein Additiv, dass die polymerisationsfähigen Endgruppen durch Wasserstoffatome ersetzt, zugegeben.

Die beiden anderen Fraktionen wurden durch Ausfällen isoliert und die Endgruppensubstitution wurde in einem nachfolgenden Schritt sowohl mit als auch ohne Zusatz eines Beschleunigers durchgeführt. Alle drei Fraktionen wurden anschließend zu den Poly-4-hydroxystyrol-Copolymeren hydrolysiert und final einem Temperaturstabilitätstest unterzogen.

a) Polymerisation

In einem 50 mL Rundkolben mit Magnetrührstäbchen, Septum und Stickstoffzuleitung werden 15 mL (98,1 mmol) entstabilisiertes 4-Acetoxystyrol, 2,2 mL (19,2 mmol) Styrol, 1,209 g (4,69 mmol) EBTEMPO, 1,32 mL (14,0 mmol) Essigsäureanhydrid und 2 mL Methoxy-2-propylacetat (PGMEA) vorgelegt und durch Einleiten von Stickstoff entgast. Der Rundkolben wird in einem auf 130°C vorgeheizten Ölbad platziert und die Mischung wird bei 130°C für 2 h gerührt. Nach dieser Zeit werden zweimal je 1/3 des Reaktionsgemisches entfernt und auf Raumtemperatur abgekühlt, in Heptan ausgefällt, filtriert und getrocknet (Fraktion II und Fraktion III). Der Fraktion im ursprünglichen Kolben (Fraktion I) werden 1,6 g Irganox 1076 bei Reaktionstemperatur zugegeben. Nach Rühren für weitere 2 h bei dieser Temperatur wird das Gemisch auf Raumtemperatur abgekühlt.

Die Polymere aus Fraktion II und Fraktion III werden jeweils in einem 50 mL Rundkolben mit Magnetrührstäbchen, Septum und Stickstoffzuleitung in je 3 mL Methoxy-2-propylacetat (PGMEA) gelöst und mit jeweils 1,6 g Irganox

1076 versetzt. Zu Fraktion II werden zusätzlich 0,4 mL (4,24 mmol) Essigsäureanhydrid gegeben. Die gelösten Fraktionen II und III werden durch Einleiten von Stickstoff entgast, in einem auf 130°C vorgeheizten Ölbad platziert und bei dieser Temperatur gerührt, bis im $^1$H-NMR-Spektrum keine reaktiven Endgruppen mehr identifiziert werden können. Fraktion II wird demgemäß nach 2 h und Fraktion III nach 7 h auf Raumtemperatur abgekühlt.

Alle drei Reaktionsgemische (Fraktion I, II und III) werden mit jeweils 10 mL Ethylacetat verdünnt und in n-Heptan ausgefällt. Die Polymere werden filtriert und bis zur Gewichtskonstanz bei 60°C unter Vakuum getrocknet.

a) Hydrolyse

Je 5 g der in a) hergestellten Poly(4-acetoxystyrol-co-styrole) werden in 50mL Methanol dispergiert und durch Einleiten von Stickstoff entgast. Die Gemische werden mit 0,35 mL Methansulfonsäure versetzt und unter Stickstoff über Nacht bei Raumtemperatur gerührt, wobei die Polymere im Laufe der Rektion in Lösung gehen. Die Produkte werden anschließend in Wasser gefällt und filtriert. Der Rückstände werden in Ethylacetat gelöst und zweimal mit Wasser extrahiert.

Durch abschließende Fällung in Hexan werden die Polymere isoliert.

b) Temperaturstabilitätstest

Die hydrolysierten Polymere der Fraktionen I, II und III werden in Festsubstanz für 3h auf 130°C unter Luftatmosphäre in einem Ofen erhitzt. Nach Abkühlen auf Raumtemperatur werden von allen Proben die Molekulargewichtsverteilungen mit der GPC bestimmt und mit denen vor dem Temperaturstabilitätstest verglichen (Tab. 8).

Tab. 8. Polydispersitätsindices der in Erfindungsgemäßem Beispiel 5 hergestellten Polymere vor und nach Temperaturstabilitätstest, gemessen mit der GPC (Polystyrol-Kalibration).

| Polymer | | PDI (Mw/Mn) | Zunahme |
|---|---|---|---|
| Endgruppen in einer Eintopfreaktion beschleunigt substituiert (Fraktion I aus erfindungsgemäßem Beispiel 5 nach Hydrolyse) | vor Erhitzen | 1,31 | |
| | nach Erhitzen auf 130°C für 3 h | 1,34 | 2,3 % |
| Endgruppen beschleunigt nach vorheriger Isolierung substituiert (Fraktion II aus erfindungsgemäßem Beispiel 5 nach Hydrolyse) | vor Erhitzen | 1,34 | |
| | nach Erhitzen auf 130°C für 3 h | 1,44 | 7,5 % |
| Endgruppen unbeschleunigt nach vorheriger Isolierung substituiert (Fraktion III aus erfindungsgemäßem Beispiel 5 nach Hydrolyse) | vor Erhitzen | 1,29 | |
| | nach Erhitzen auf 130°C für 3 h | 1,40 | 8,5 % |

Tabelle 8 kann entnommen werden, dass die Methode der Endgruppensubstitution einen entscheidenden Einfluss auf die Temperaturbeständigkeit der hydrolysierten Polymere hat. Die Breite der Molekulargewichtsverteilung von Fraktion I, also des Polymeren, dessen Endgruppen beschleunigt in einer Eintopfreaktion substituiert wurden, nimmt nach Erhitzen auf 130°C für 3 h lediglich um 2,3 % zu. Die Breite der Molekulargewichtsverteilung von Fraktion II, also des Polymeren, dessen Endgruppen beschleunigt nach vorheriger Isolierung substituiert wurden, nimmt nach Erhitzen auf 130°C für 3 h bereits um 7,5 % zu. Die Breite der Molekulargewichtsverteilung von Fraktion III, also des Polymeren, dessen Endgruppen unbeschleunigt nach vorheriger Isolierung substituiert wurden, nimmt nach Erhitzen auf 130°C für 3 h sogar um 8,5 % zu. Daraus kann abgeleitet werden, dass die beschleunigte Endgruppensubstitution in einer Eintopfreaktion Produkte mit der besten Temperaturbeständigkeit liefert, aber auch noch die Beschleunigung der Endgruppensubstitution nach vorheriger Isolierung der Polymere noch einen stabilisierenden Einfluss auf die Temperaturbeständigkeit der Polymere hat.

## Patentansprüche

1. Verfahren zur Herstellung eines Polymerisates durch Nitroxyl-kontrollierte Polymerisation, umfassend die nachfolgenden Schritte:

    a) Bereitstellen eines zur radikalischen Polymerisation fähigen Gemisches, enthaltend oder bestehend aus

i) mindestens ein durch radikalische Polymerisation polymerisierbares Monomer A1, oder ein Monomergemisch, enthaltend oder bestehend aus dem mindestens einen Monomer A1 sowie mindestens einem weiteren zur radikalischen Polymerisation befähigten, vom Monomeren A1 verschiedenem Monomer A2, und

ii) mindestens einen Initiator B, ausgewählt aus der Gruppe bestehend aus

einem Alkoxyamin B1, das die radikalische Polymerisation durch Spaltung in ein Alkyl- und ein Nitroxylradikal initiiert

und

einem Initiator B2, der mindestens einen Radikalstarter sowie mindestens ein Nitroxylradikal umfasst,

b) Initiierung der radikalischen Polymerisation und Aufrechterhaltung der Polymerisation über einen Zeitraum, der die Polymerisation zu einem Umsatz von 10 bis 100 % erlaubt,

c) Zugabe mindestens eines reaktiven Agens C nach einem Umsatz der Polymerisation zwischen 10% und 100% in einer Menge, die zumindest einen Teil oder die Gesamtheit der bei der Nitroxyl-kontrollierten radikalischen Polymerisation erzeugten Alkoxyamin-Endgruppen des Polymerisates in eine nicht polymerisationsfähige Gruppe überführt, sowie

d) Zugabe mindestens eines Additivs D zu einem oder mehrerer der Schritte a) bis c), das die Nitroxyl-kontrollierte Polymerisationsreaktion und/oder die Überführung der Alkoxyamin-Endgruppen des Polymerisates in eine nicht polymerisationsfähige Gruppe beschleunigt.

2. Verfahren nach Anspruch 1, **dadurch gekennzeichnet, dass** sämtliche der Schritte a) bis d) in Anspruch 1 in einer Eintopfreaktion ausgeführt werden.

3. Verfahren nach einem der vorhergehenden Ansprüche , **dadurch gekennzeichnet, dass**

das mindestens eine Monomer A1 ausgewählt ist aus der Gruppe der Hydroxystyrolmonomere, deren Hydroxygruppe mit einer bei den Bedingungen der radikalischen Polymerisation inerten Schutzgruppe geschützt ist, und/oder

das Monomergemisch mindestens ein Hydroxystyrolmonomer A1, dessen Hydroxygruppe mit einer bei den Bedingungen der radikalischen Polymerisation inerten Schutzgruppe geschützt ist sowie mindestens ein weiteres zur radikalischen Polymerisation befähigtes, vom Hydroxystyrolmonomer A1 verschiedenes Monomer A2 enthält oder hieraus besteht, wobei bevorzugt

die Hydroxystyrolmonomere ausgewählt sind aus der Gruppe bestehend aus Alkoxy-, Aryloxy-, Acyloxy-, Silyloxy-, Carbamyloxy- oder Sulfonyloxy-substituierten Hydroxystyrolen, insbesondere 4-Acetoxystyrol, 4-t-Butoxystyrol, 4-Trimethylsilyloxystyrol, 4-t-Butyldimethylsilyloxystyrol, 4-Triethylsilyloxystyrol, 4-Triisopropylsilyloxystyrol, 4-Methoxystyrol, 4-Methoxymethoxystyrol, 4-Benzoxystyrol, 4-p-Methoxybenzoxystyrol, 4-Benzyloxymethoxyxstyrol, 4-t-Butyloxycarbonyloxystyrol, 4-Triphenylmethyloxystyrol, 4-Pivaloyloxystyrol, 4-Benzoyloloxystyrol, 4-p-Toluolsulfonyloxystyrol, und 4-Methylsulfonyloxystyrol. sowie Mischungen und Kombinationen hiervon.

4. Verfahren nach einem der vorhergehenden Ansprüche, **dadurch gekennzeichnet, dass** das mindestens eine Additiv D ausgewählt ist aus der Gruppe bestehend aus Carbonsäurederivaten und Ketonen sowie Kombinationen hiervon, wobei bevorzugt

die Carbonsäurederivate ausgewählt sind aus der Gruppe bestehend aus Carbonsäureanhydriden, Carbonsäureestern und Carbonsäurenitrilen, insbesondere Essigsäureanhydrid, Trifluoressigsäureanhydrid, Acetessigester, Diethylmalonat und/oder Malonitril; und

das Keton Acetylaceton ist, und/oder

bevorzugt das mindestens eine Additiv D in einer Menge von 5 bis 600 mol-%, bevorzugt 20 bis 200 mol-%, besonders bevorzugt 100 bis 150 mol-%, bezogen auf die Menge des Initiators B eingesetzt wird.

5. Verfahren nach einem der vorhergehenden Ansprüche, **dadurch gekennzeichnet, dass** das mindestens eine weitere Monomer A2 ausgewählt ist aus der Gruppe bestehend aus Styrolen, Isopren, Butadien und Acrylaten, insbesondere Acrylaten mit der nachfolgend abgebildeten Formel

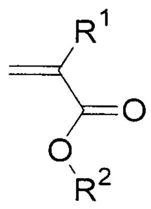

wobei jeweils unabhängig voneinander

$R^1$ Wasserstoff oder eine Alkylgruppe, insbesondere eine Methyl-gruppe und
$R^2$ eine Methyl-, Ethyl-, n-Propyl-, i-Propyl-, n-Butyl-, i-Butyl-, t-Butyl-, t-Amyl-, Benzyl-, Cyclohexyl-, 9-Anthracenyl-, 2-Hydroxy-ethyl-, 3-Phenyl-2-propenyl, Adamantyl-, Methyladamantyl-, Ethyladamantyl-, Isobornyl-, 2-Ethoxyethyl-, n-Heptyl-, n-Hexyl-, 2-Hydroxypropyl-, 2-Ethylbutyl-, 2-Methoxypropyl-, 2-(2-Methoxyethoxy), 2-Naphthyl-, 2-Phenylethyl-, Phenyl-, Lauryl-, Myristyl-, Cetyl-, Stearyl-, Ceryl-, i-Decyl-, 2-Ethylhexyl-, Ethyltriglycol-, Tetrahydrofurfuryl-, Butyldiglycol-, 2-Dimethylaminoethyl-, Polyethylenglycol-, Methylpolyethylenglycol- oder Glycidyl-gruppe

bedeuten.

6. Verfahren nach einem der vorhergehenden Ansprüche, **dadurch gekennzeichnet, dass** der molare Anteil des mindestens einen Hydroxystyrolmonomers A1, bezogen auf die Gesamtheit des mindestens einen Hydroxystyrolmonomers A1 und des mindestens einen weiteren Monomers A2 im Monomergemisch, von 0,1 bis 99,9 mol-%, bevorzugt von 5 bis 95 mol-%, insbesondere von 20 bis 90 mol-% beträgt.

7. Verfahren nach einem der vorhergehenden Ansprüche, **dadurch gekennzeichnet, dass** das mindestens eine Alkoxyamin B1 ausgewählt ist aus Verbindungen mit der nachfolgend abgebildeten allgemeinen Formel

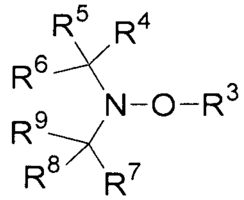

wobei jeweils unabhängig voneinander

$R^3$ eine Gruppe mit mindestens einem Kohlenstoffatom, die in der Lage ist, eine homolytische Spaltung der Bindung zwischen Sauerstoffatom und Rest $R^3$ einzugehen und ein Radikal $\cdot R^3$ zu bilden, wobei der Rest $R^3$ insbesondere ausgewählt ist aus der Gruppe bestehend aus 1-Phenylethyl, t-Butyl, Cyano-i-propyl, Phenyl, Methyl,
$R^4$, $R^5$, $R^7$ und $R^8$ gleich oder verschieden sind und ausgewählt sind aus der Gruppe bestehend aus linearen, verzweigten oder cyclischen und/oder unsubstituierten oder substituierten Alkylresten, wobei die Reste $R^4$, $R^5$, $R^7$ und $R^8$ insbesondere gleich oder verschieden sind und ausgewählt sind aus der Gruppe bestehend aus Methyl, Ethyl, n-Propyl, i-Propyl, n-Butyl, i-Butyl, t-Butyl, Neopentyl, Benzyl, Cyclohexyl, oder die Gruppierungen $R^4$-C-$R^5$ und/oder $R^7$-C-$R^8$ über die Reste $R^4$ und R5 und/oder $R^7$ und $R^8$ eine cyclische Struktur bilden, die ihrerseits substituiert oder unsubstituiert sein kann,
$R^6$ und $R^9$ gleich oder verschieden sind und ausgewählt sind aus der Gruppe bestehend aus linearen, verzweigten oder cyclischen und/oder unsubstituierten oder substituierten Alkylresten, oder die Gruppierung $R^6$-C-N-C-$R^9$ über die Reste $R^6$ und $R^9$ eine cyclische Struktur bildet, die ihrerseits substituiert oder unsubstituiert und/oder an ein aliphatisches oder aromatisches Ringsystem anneliert sein kann, wobei die cyclische Struktur insbesondere ausgewählt ist aus Strukturen mit den nachfolgend abgebildeten allgemeinen Formeln

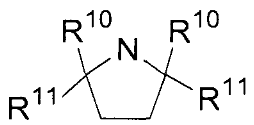 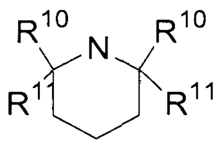 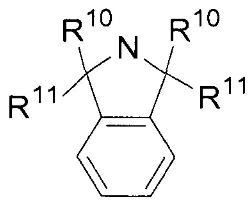

wobei jeweils unabhängig voneinander bei jedem Auftreten $R^{10}$ und $R^{11}$ gleich oder verschieden sind und ausgewählt ist aus der Gruppe bestehend aus linearen oder verzweigten und/oder unsubstituierten oder substituierten Alkylresten, insbesondere Methyl, Ethyl, n-Propyl, i-Propyl, n-Butyl, i-Butyl, t-Butyl, Neopentyl, Benzyl, Cyclohexyl und Wasserstoff,

bedeuten.

8. Verfahren nach einem der vorhergehenden Ansprüche, **dadurch gekennzeichnet, dass** der mindestens eine Initiator B2

mindestens einen Radikalstarter ausgewählt aus der Gruppe bestehend aus Peroxiden; Azoverbindungen, insbesondere Dibenzoylperoxid, Cumolhydroperoxid, Dicumylperoxid, 1,1-Di-(t-butylperoxy)cyclohexan, t-Amylperoxyacetat, Diisopropylperoxydicarbonat, Peroxodisulfaten Azobis(isobutyronitril), Peroxodisulfaten; Redox-Systemen und Photoinitiatoren sowie
mindestens ein Nitroxylradikal ausgewählt aus der Gruppe bestehend aus Nitroxylradikalen mit der nachfolgend abgebildeten allgemeinen Formel

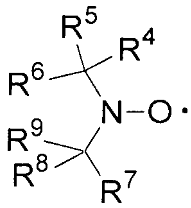

wobei jeweils unabhängig voneinander

$R^4$, $R^5$, $R^7$ und $R^8$ gleich oder verschieden sind und ausgewählt sind aus der Gruppe bestehend aus linearen, verzweigten oder cyclischen und/oder unsubstituierten oder substituierten Alkylresten, wobei die Reste $R^4$, $R^5$, $R^7$ und $R^8$ insbesondere gleich oder verschieden sind und ausgewählt sind aus der Gruppe bestehend aus Methyl, Ethyl, n-Propyl, i-Propyl, n-Butyl, i-Butyl, t-Butyl, Neopentyl, Benzyl, Cyclohexyl, oder die Gruppierungen $R^4$-C-$R^5$ und/oder $R^7$-C-$R^8$ über die Reste $R^4$ und R5 und/oder $R^7$ und $R^8$ eine cyclische Struktur bilden, die ihrerseits substituiert oder unsubstituiert sein kann,
$R^6$ und $R^9$ gleich oder verschieden sind und ausgewählt sind aus der Gruppe bestehend aus linearen, verzweigten oder cyclischen und/oder unsubstituierten oder substituierten Alkylresten, oder die Gruppierung $R^6$-C-N-C-$R^9$ über die Reste $R^6$ und $R^9$ eine cyclische Struktur bildet, die ihrerseits substituiert oder unsubstituiert und/oder an ein aliphatisches oder aromatisches Ringsystem anneliert sein kann, wobei die cyclische Struktur insbesondere ausgewählt ist aus Strukturen mit den nachfolgend abgebildeten allgemeinen Formeln

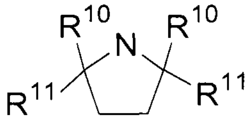 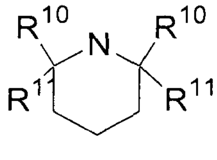 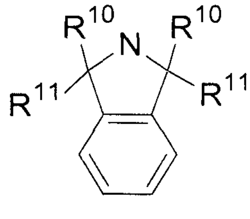

wobei jeweils unabhängig voneinander bei jedem Auftreten $R^{10}$ und $R^{11}$ gleich oder verschieden sind und ausgewählt ist aus der Gruppe bestehend aus linearen oder verzweigten und/oder unsubstituierten oder

substituierten Alkylresten, insbesondere Methyl, Ethyl, n-Propyl, i-Propyl, n-Butyl, i-Butyl, t-Butyl, Neopentyl, Benzyl, Cyclohexyl und Wasserstoff, bedeuten

umfasst oder hieraus besteht.

**9.** Verfahren nach einem der vorhergehenden Ansprüche, **dadurch gekennzeichnet, dass** bezogen auf die Gesamtstoffmenge an Monomeren A1 bzw. A1 und A2 der Initiator B in einer Menge von 0,1 bis 20 mol-%, besonders bevorzugt in einer Menge von 0,2 bis 10 mol-% und ganz besonders bevorzugt in einer Menge von 1 bis 5 mol-% eingesetzt wird.

**10.** Verfahren nach einem der vorhergehenden Ansprüche, **dadurch gekennzeichnet, dass**

das mindestens eine reaktive Agens C ausgewählt ist aus der Gruppe bestehend aus substituierten Phenolen, insbesondere 2,6-Di-tert-butyl-p-kresol, Octadecyl-3-(3,5-di-tert-butyl-4-hydroxyphenyl)-propionat, 2,6-Di-tert-butylphenol, Hydrochinon; und nicht homopolymerisierbaren Monomeren, insbesondere Maleinsäureanhydrid oder Isobutylvinylether, und/oder

das mindestens eine reaktive Agens C in einer Menge von 10 bis 1000 mol-%, bevorzugt von 90 bis 200 mol-% und ganz besonders bevorzugt von 100 bis 150 mol-%, bezogen auf die Konzentration des Initiators B eingesetzt wird.

**11.** Verfahren nach einem der vorhergehenden Ansprüche, **dadurch gekennzeichnet, dass** das zur radikalischen Polymerisation fähige Gemische ein Lösungsmittel beinhaltet oder hieraus besteht, wobei das Lösungsmittel insbesondere ausgewählt ist aus der Gruppe bestehend aus PGMEA, Ethylacetat, Toluol, Xylol, Ethylbenzol, Anisol, Aceton, 2-Butanon, Acetonitril, Dimethylsulfoxid, Tetrahydrofuran, Dioxan, Diethylether, tert-Butylmethylether, Pentan, Hexan, Heptan, Cyclopentan, Cyclohexan, Methanol, Ethanol, n-Propanol, i-Propanol, n-Butanol, t-Butanol, Ethylenglycol, Propylenglycol, Diethylenglycol, Ethylenglycolmonomethylether, Ethylenglycoldimethylether, Diethylenglycolmonomethylether, Diethylenglycoldimethylether, Diethylenglycolmonobutylether sowie Mischungen und Kombinationen hiervon.

**12.** Verfahren nach einem der vorhergehenden Ansprüche, **dadurch gekennzeichnet, dass**

die Initiierung der Polymerisationsreaktion thermisch oder aktinisch erfolgt, und/oder

die Temperatur zur Initiierung und/oder Polymerisationsreaktion auf 60 bis 180 °C, bevorzugt 90 und 140 °C, besonders bevorzugt 100 und 130 °C eingestellt wird, und/oder

nach Abschluss des Schrittes c) die Schutzgruppe des im Polymerisat gebundenen Hydroxystyrolmonomers A1 abgespalten wird.

## Claims

**1.** Method for preparing a polymer by nitroxyl-controlled polymerization, comprising the following steps:

a) providing a mixture capable of radical polymerization, comprising or consisting of

i) at least one monomer A1 polymerizable by radical polymerization, or a monomer mixture comprising or consisting of the at least one monomer A1 and at least one further monomer A2 capable of free-radical polymerization and different from the monomer A1, and

ii) at least one initiator B selected from the group consisting of

an alkoxyamine B1, which initiates the radical polymerization by cleavage into an alkyl and a nitroxyl radical

and

an initiator B2 comprising at least one radical starter and at least one nitroxyl radical,

b) initiation of the radical polymerization and maintenance of the polymerization over a period of time that allows polymerization to a conversion of 10 to 100 %,

c) addition of at least one reactive agent C after a conversion of the polymerization of between 10% and 100% in an amount which converts at least some or all of the alkoxyamine end groups of the polymer produced during

the nitroxyl-controlled radical polymerization into a non-polymerizable group, and
d) addition of at least one additive D to one or more of steps a) to c), which accelerates the nitroxyl-controlled polymerization reaction and/or the conveyance of the alkoxyamine end groups of the polymer into a non-polymerizable group.

2. Method according to claim 1, **characterized in that** all of steps a) to d) in claim 1 are carried out in a one-pot reaction.

3. Method according to one of the preceding claims, **characterized in that**

the at least one monomer A1 is selected from the group of hydroxystyrene monomers whose hydroxyl group is protected by a protecting group which is inert under the conditions of radical polymerization, and/or
the monomer mixture contains or consists of at least one hydroxystyrene monomer A1, the hydroxyl group of which is protected by a protective group which is inert under the conditions of radical polymerization, and at least one further monomer A2 which is capable of radical polymerization and is different from the hydroxystyrene monomer A1, wherein preferably
the hydroxystyrene monomers are selected from the group consisting of alkoxy-, aryloxy-, acyloxy-, silyloxy-, carbamyloxy- or sulfonyloxy-substituted hydroxystyrenes, in particular 4-acetoxystyrene, 4-t-butoxystyrene, 4-trimethylsilyloxystyrene, 4-t-butyldimethylsilyloxystyrene, 4-triethylsilyloxystyrene, 4-triisopropylsilyloxystyrene, 4-methoxystyrene, 4-methoxymethoxystyrene, 4-benzoxystyrene, 4-p-methoxy-benzoxystyrene, 4-benzyloxymethoxyxstyrene, 4-t-butyloxycarbony-loxystyrene, 4-triphenylmethyloxystyrene, 4-pivaloyloxystyrene, 4-benzoyo-loxystyrene, 4-p-toluenesulfonyloxystyrene, and 4-methylsulfonyloxystyrene. as well as mixtures and combinations thereof.

4. Method according to any one of the preceding claims, **characterized in that** the at least one additive D is selected from the group consisting of carboxylic acid derivatives and ketones and combinations thereof, wherein preferably

the carboxylic acid derivatives are selected from the group consisting of carboxylic acid anhydrides, carboxylic acid esters and carboxylic acid nitriles, in particular acetic acid anhydride, trifluoroacetic acid anhydride, acetoacetic ester, diethyl malonate and/or malonitrile; and
the ketone is acetylacetone, and/or
preferably the at least one additive D is used in an amount of 5 to 600 mol%, preferably 20 to 200 mol%, particularly preferably 100 to 150 mol%, based on the amount of initiator B.

5. Method according to one of the preceding claims, **characterized in that** the at least one further monomer A2 is selected from the group consisting of styrenes, isoprene, butadiene and acrylates, in particular acrylates having the formula shown below

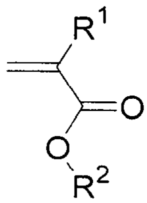

wherein, respectively independent of one another,

$R^1$ means hydrogen or an alkyl group, in particular a methyl group and
$R^2$ means a methyl, ethyl, n-propyl, i-propyl, n-butyl, i-butyl, t-butyl, t-amyl, benzyl, cyclohexyl, 9-anthracenyl, 2-hydroxy-ethyl, 3-phenyl-2-propenyl, adamantyl, methyladamantyl, ethyladamantyl, isobornyl, 2-ethoxyethyl, n-heptyl, n-hexyl-, 2-hydroxy-propyl-, 2-ethylbutyl-, 2-methoxypropyl-, 2-(2-methoxyethoxy), 2-naphthyl-, 2-phenylethyl-, phenyl-, lauryl-, myristyl-, cetyl-, stearyl-, ceryl-, i-decyl-, 2-ethylhexyl-, ethyltriglycol, tetrahydro-furfuryl, butyldiglycol, 2-dimethylaminoethyl, polyethylene glycol, methyl polyethylene glycol or glycidyl group.

6. Method according to one of the preceding claims, **characterized in that** the molar proportion of the at least one hydroxystyrene monomer A1, based on the total of the at least one hydroxystyrene monomer A1 and the at least one further monomer A2 in the monomer mixture, is from 0.1 to 99.9 mol%, preferably from 5 to 95 mol%, in particular from 20 to 90 mol%.

7. Method according to one of the preceding claims, **characterized in that** at least one alkoxyamine B1 is selected from compounds having the general formula shown below

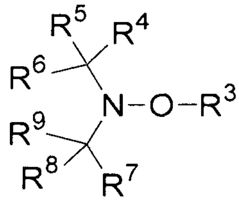

wherein, respectively independent of one another,

$R^3$ means a group having at least one carbon atom which is capable of undergoing homolytic cleavage of the bond between the oxygen atom and the residue $R^3$ and to form a radical $R^3$, wherein the residue $R^3$ is in particular selected from the group consisting of 1-phenylethyl, t-butyl, cyano-i-propyl, phenyl, methyl,
$R^4$, $R^5$, $R^7$ and $R^8$ are identical or different and are selected from the group consisting of linear, branched or cyclic and/or unsubstituted or substituted alkyl residues, the residues $R^4$, $R^5$, $R^7$ and $R^8$ in particular being identical or different and being selected from the group consisting of methyl, ethyl, n-propyl, i-propyl, n-butyl, i-butyl, t-butyl, neopentyl, benzyl, cyclohexyl, or the groupings $R^4$-C-$R^5$ and/or $R^7$-C-$R^8$ form a cyclic structure via the residues $R^4$ and $R^5$ and/or $R^7$ and $R^8$, which in turn may be substituted or unsubstituted,
$R^6$ and $R^9$ are identical or different and are selected from the group consisting of linear, branched or cyclic and/or unsubstituted or substituted alkyl residues, or the grouping $R^6$-C-N-C-$R^9$ forms a cyclic structure via the residues $R^6$ and $R^9$, which in turn may be substituted or unsubstituted and/or fused to an aliphatic or aromatic ring system, the cyclic structure being selected in particular from structures having the general formulae shown below

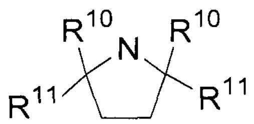

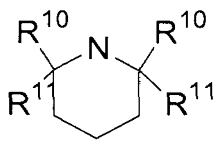

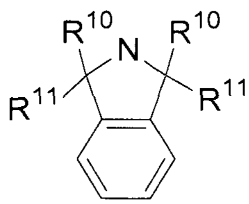

where $R^{10}$ and $R^{11}$ are identical or different in each occurrence independently of one another and are selected from the group consisting of linear or branched and/or unsubstituted or substituted alkyl residues, in particular methyl, ethyl, n-propyl, i-propyl, n-butyl, i-butyl, t-butyl, neopentyl, benzyl, cyclohexyl and hydrogen.

8. Method according to any one of the preceding claims, **characterized in that** the at least one initiator B2 contains or consists of

at least one radical starter selected from the group consisting of peroxides; azo compounds, in particular dibenzoyl peroxide, cumene hydroperoxide, dicumyl peroxide, 1,1-di-(t-butyl peroxy)cyclohexane, t-amyl peroxyacetate, diisopropyl peroxydicarbonate, peroxodisulfate azobis(isobutyronitrile), peroxodisulfates; redox systems and photoinitiators and
at least one nitroxyl radical selected from the group consisting of nitroxyl radicals having the general formula shown below

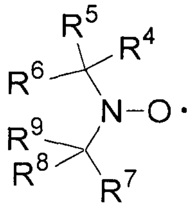

wherein, respectively independent of one another,

$R^4$, $R^5$, $R^7$ and $R^8$ are identical or different and are selected from the group consisting of linear, branched or cyclic and/or unsubstituted or substituted alkyl residues, the residues $R^4$, $R^5$, $R^7$ and $R^8$ in particular being identical or different and being selected from the group consisting of methyl, ethyl, n-propyl, i-propyl, n-butyl, i-butyl, t-butyl, neopentyl, benzyl, cyclohexyl, or the groupings $R^4C$-$R^5$ and/or $R^7C$-$R^8$ form a cyclic structure via the residues $R^4$ and $R^5$ and/or $R^7$and $R^8$, which in turn may be substituted or unsubstituted, $R^6$ and $R^9$ are identical or different and are selected from the group consisting of linear, branched or cyclic and/or unsubstituted or substituted alkyl residues, or the grouping $R^{6}$-C-N-C-$R^9$ forms a cyclic structure via the residues $R^6$ and $R^9$, which in turn may be substituted or unsubstituted and/or fused to an aliphatic or aromatic ring system, the cyclic structure being selected in particular from structures having the general formulae shown below

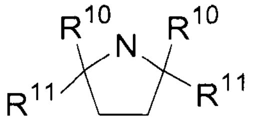 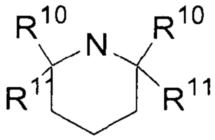 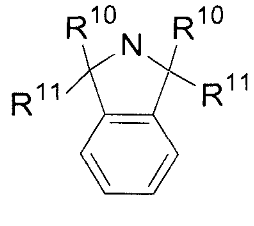

wherein $R^{10}$ and $R^{11}$ are identical or different in each occurrence independently of one another and are selected from the group consisting of linear or branched and/or unsubstituted or substituted alkyl residues, in particular methyl, ethyl, n-propyl, i-propyl, n-butyl, i-butyl, t-butyl, neopentyl, benzyl, cyclohexyl and hydrogen, holds.

9. Method according to one of the preceding claims, **characterized in that**, based on the total amount of monomers A1 or A1 and A2, the initiator B is used in an amount of 0.1 to 20 mol%, particularly preferably in an amount of 0.2 to 10 mol% and very particularly preferably in an amount of 1 to 5 mol%.

10. Method according to one of the preceding claims, **characterized in that**

the at least one reactive agent C is selected from the group consisting of substituted phenols, in particular 2,6-di-tert-butyl-p-cresol, octadecyl-3-(3,5-di-tert-butyl-4-hydroxyphenyl)-propionate, 2,6-di-tert-butylphenol, hydroquinone; and non-homopolymerizable monomers, in particular maleic anhydride or isobutyl vinyl ether, and/or the at least one reactive agent C is used in an amount of from 10 to 1000 mol%, preferably from 90 to 200 mol% and most preferably from 100 to 150 mol%, based on the concentration of the initiator B.

11. Method according to one of the preceding claims, **characterized in that** the mixture capable of radical polymerization contains or consists of a solvent, the solvent being selected in particular from the group consisting of PGMEA, ethyl acetate, toluene, xylene, ethylbenzene, anisole, acetone, 2-butanone, acetonitrile, dimethyl sulfoxide, tetrahydrofuran, dioxane, diethyl ether, tert-butyl methyl ether, pentane, hexane, heptane, cyclopentane, cyclohexane, methanol, ethanol, n-propanol, i-propanol, n-butanol, t-butanol, ethylene glycol, propylene glycol, diethylene glycol, ethylene glycol monomethyl ether, Ethylene glycol dimethyl ether, diethylene glycol mono-methyl ether, diethylene glycol dimethyl ether, diethylene glycol mono-butyl ether and mixtures and combinations thereof.

12. Method according to one of the preceding claims, **characterized in that**

the initiation of the polymerization reaction is thermal or actinic, and/or
the temperature for initiation and/or polymerization reaction is set to 60 to 180 °C, preferably 90 and 140 °C, particularly preferably 100 and 130 °C, and/or
after completion of step c), the protecting group of the hydroxystyrene monomer A1 bound in the polymer is cleaved off.

## Revendications

1. Procédé de production d'un polymérisat par polymérisation contrôlée par nitroxyle, comprenant les étapes suivantes consistant à :

a) fournir un mélange compatible avec une polymérisation par voie radicalaire, contenant ou constitué de

i) au moins un monomère A1 qui peut être polymérisé par polymérisation par voie radicalaire, ou un mélange de monomères contenant ou constitué du au moins un monomère A1 et d'au moins un autre monomère A2 compatible avec une polymérisation par voie radicalaire et différent du monomère A1, et
ii) au moins un initiateur B, choisi dans le groupe constitué de

une alcoxyamine B1, qui initie la polymérisation par voie radicalaire par clivage en un radical alkyle et un radical nitroxyle
et
un initiateur B2, qui comprend au moins un initiateur radicalaire et au moins un radical nitroxyle,

b) initier la polymérisation par voie radicalaire et maintenir la polymérisation sur une durée qui permet à la polymérisation d'atteindre une conversion de 10 à 100 %,
c) ajouter au moins un agent réactif C après une conversion de la polymérisation comprise entre 10 % et 100 %, en une quantité qui convertit au moins une partie ou la totalité des groupes terminaux alcoxyamine du polymérisat générés durant la polymérisation par voie radicalaire contrôlée par nitroxyle en un groupe non polymérisable, et
d) ajouter au moins un additif D à une ou plusieurs des étapes a) à c), qui accélère la réaction de polymérisation contrôlée par nitroxyle et/ou la conversion des groupes terminaux alcoxyamine du polymérisat en un groupe non polymérisable.

**2.** Procédé selon la revendication 1, **caractérisé en ce que** toutes les étapes a) à d) de la revendication 1 sont réalisées dans une réaction en récipient unique.

**3.** Procédé selon l'une quelconque des revendications précédentes, **caractérisé en ce que**

le au moins un monomère A1 est choisi dans le groupe des monomères hydroxystyrène dont le groupe hydroxy est protégé par un groupe protecteur inerte dans les conditions de polymérisation par voie radicalaire, et/ou
le mélange de monomères contient ou est constitué d'au moins un monomère hydroxystyrène A1 dont le groupe hydroxy est protégé par un groupe protecteur inerte dans les conditions de polymérisation par voie radicalaire, et d'au moins un autre monomère A2 compatible avec une polymérisation par voie radicalaire et est différent du monomère hydroxystyrène A1, la préférence dans lequel de préférence
les monomères hydroxystyrènes sont choisis dans le groupe constitué par des hydroxystyrènes substitués par alcoxy, aryloxy, acyloxy, silyloxy, carbamyloxy ou sulfonyloxy, en particulier le 4-acétoxystyrène, le 4-t-butoxystyrène, le 4-triméthylsilyloxystyrène, le 4-t-butyl-diméthylsilyloxystyrène, le 4-triéthylsilyloxystyrène, le 4-triisopropylsilyloxystyrène, le 4-méthoxystyrène, le 4-méthoxyméthoxystyrène, le 4-benzoxystyrène, le 4-p-méthoxybenzoxystyrène, le 4-benzyloxyméthoxystyrène, le 4-t-butyloxycarbony-loxystyrène, le 4--triphénylméthyloxystyrène, le 4-pivaloyloxystyrène, le 4-benzoyo-loxystyrène, le 4-p-toluènesulfonyloxystyrène et le 4-méthylsulfonyloxystyrène, et des mélanges et combinaisons de ceux-ci.

**4.** Procédé selon l'une quelconque des revendications précédentes, **caractérisé en ce que** le au moins un additif D est choisi dans le groupe constitué par des dérivés d'acide carboxylique et des cétones, et des combinaisons de ceux-ci, dans lequel de préférence

les dérivés d'acide carboxylique sont choisis dans le groupe constitué par des anhydrides d'acide carboxylique, des esters d'acide carboxylique et des nitriles d'acide carboxylique, notamment l'anhydride acétique, l'anhydride trifluoroacétique, l'ester acétoacétique, le malonate de diéthyle et/ou le malonitrile ; et
la cétone est l'acétylacétone, et/ou
de préférence le au moins un additif D est utilisé en une quantité de 5 à 600 % en mole, de préférence de 20 à 200 % en mole, de manière particulièrement préférée de 100 à 150 % en mole, sur la base de la quantité de l'initiateur B.

**5.** Procédé selon l'une quelconque des revendications précédentes, **caractérisé en ce que** le au moins un autre monomère A2 est choisi dans le groupe constitué par les styrènes, l'isoprène, le butadiène et les acrylates, en particulier les acrylates présentant la formule indiquée ci-dessous

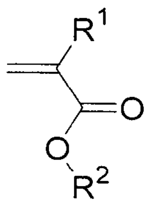

chacun étant, indépendant l'un de l'autre,

$R^1$ de l'hydrogène ou un groupe alkyle, en particulier un groupe méthyle, et
$R^2$ un groupe méthyle, éthyle, n-propyle, i-propyle, n-butyle, i-butyle, t-butyle, t-amyle, benzyle, cyclohexyle, 9-anthracényle, 2-hydroxy-éthyle, 3-phényl-2-propényle, adamantyle, méthylada-mantyle, éthyladamantyle, isobornyle, 2-éthoxyéthyle, n-heptyle, n-hexyle, 2-hydroxypropyle, 2-éthylbutyle, 2-méthoxypropyle, 2-(2-méthoxyéthoxy), 2-naphtyle, 2-phényléthyle, phényle, lauryle, myristyle, cétyle, stéaryle, céryl, i-décyle, 2-éthylhexyle, éthyltriglycol, tétrahydrofurfuryle, butyldiglycol, 2-diméthylaminoéthyle, polyéthylèneglycol, méthylpolyéthylèneglycol ou glycidyle.

**6.** Procédé selon l'une quelconque des revendications précédentes, **caractérisé en ce que** la proportion molaire du au moins un monomère hydroxystyrène A1, par rapport à la somme du au moins un monomère hydroxystyrène A1 et du au moins un autre monomère A2 dans le mélange de monomères, est de 0,1 à 99,9 % en mole, de préférence de 5 à 95 % en mole, en particulier de 20 à 90 % en mole.

**7.** Procédé selon l'une quelconque des revendications précédentes, **caractérisé en ce que** la au moins une alcoxyamine B1 est choisie parmi les composés de la formule générale indiquée ci-dessous

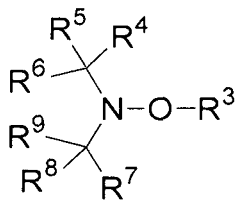

chacun étant, indépendant l'un de l'autre,

$R^3$ un groupe comportant au moins un atome de carbone susceptible de subir un clivage homolytique de la liaison entre l'atome d'oxygène et le reste $R^3$ et de former un radical $R^3$, dans lequel le reste $R^3$ est notamment choisi dans le groupe comprenant 1-phényléthyle, t-butyle, cyano-i-propyle, phényle, méthyle,
$R^4$, $R^5$, $R^7$ et $R^8$ sont identiques ou différents, et sont choisis dans le groupe constitué par des restes alkyle linéaires, ramifiés ou cycliques et/ou non substitués ou substitués, dans lequel les restes $R^4$, $R^5$, $R^7$ et $R^8$ sont notamment identiques ou différents et sont choisis dans le groupe comprenant méthyle, éthyle, n-propyle, i-propyle, n-butyle, i-butyle, t-butyle, néopentyle, benzyle, cyclohexyle, ou les groupes $R^4$-C-$R^5$ et/ou $R^7$-C-$R^8$ forment, via les restes $R^4$ et R5 et/ou $R^7$ et $R^8$, une structure cyclique qui peut à son tour être substituée ou non,
$R^6$ et $R^9$ sont identiques ou différents et sont choisis dans le groupe constitué par des restes alkyle linéaires, ramifiés ou cycliques et/ou non substitués ou substitués, ou le groupe $R^6$-C-N-C-$R^9$ forme une structure cyclique via les restes $R^6$ et $R^9$, qui peut à son tour être substituée ou non substituée et/ou fusionnée à un système de cycle aliphatique ou aromatique, dans lequel la structure cyclique est choisie en particulier parmi des structures répondant aux formules générales indiquées ci-dessous

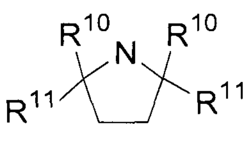

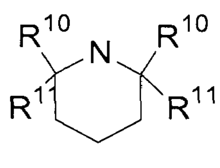

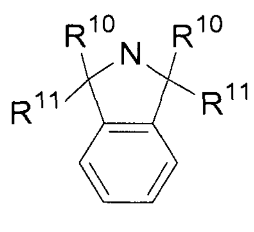

dans lequel où $R^{10}$ et $R^{11}$ sont respectivement à chaque fois identiques ou différents indépendamment l'un de l'autre et sont choisis dans le groupe constitué par des restes alkyle linéaires ou ramifiés et/ou non substitués ou substitués, notamment méthyle, éthyle, n-propyle, i-propyle, n-butyle, i-butyle, t-butyle, néopentyle, benzyle, cyclohexyle et hydrogène.

8. Procédé selon l'une quelconque des revendications précédentes, **caractérisé en ce que** le au moins un initiateur B2 comprend ou est constitué

d'au moins un initiateur radicalaire choisi dans le groupe constitué de peroxydes ; de composés azoïques, notamment peroxyde de dibenzoyle, hydroperoxyde de cumène, peroxyde de dicumyle, 1,1-di-(t-butylperoxy)cyclohexane, peroxyacétate de t-amyle, peroxydicarbonate de diisopropyle, peroxodisulfates, azobis(isobutyronitrile), peroxodisulfates ; de systèmes redox et de photoinitiateurs, ainsi que
d'au moins un radical nitroxyle choisi dans le groupe constitué des radicaux nitroxyle de la formule générale indiquée ci-dessous chacun étant, indépendant l'un de l'autre,

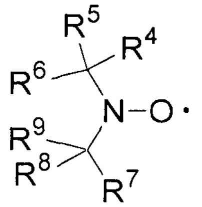

$R^4$, $R^5$, $R^7$ et $R^8$ sont identiques ou différents, et sont choisis dans le groupe constitué par des restes alkyles linéaires, ramifiés ou cycliques et/ou non substitués ou substitués, dans lequel les restes $R^4$, $R^5$, $R^7$ et $R^8$ sont notamment identiques ou différents et sont choisis dans le groupe comprenant méthyle, éthyle, n-propyle, i-propyle, n-butyle, i-butyle, t-butyle, néopentyle, benzyle, cyclohexyle, ou les groupes $R^4$-C-$R^5$ et/ou $R^7$-C-$R^8$ forment, via les restes $R^4$ et R5 et/ou $R^7$ et $R^8$, une structure cyclique qui peut à son tour être substituée ou non,
$R^6$ et $R^9$ sont identiques ou différents et sont choisis dans le groupe constitué par des restes alkyle linéaires, ramifiés ou cycliques et/ou non substitués ou substitués, ou le groupe $R^6$-C-N-C-$R^9$ forme une structure cyclique via les restes $R^6$ et $R^9$, qui peut à son tour être substituée ou non substituée et/ou fusionnée à un système de cycle aliphatique ou aromatique, dans lequel la structure cyclique est choisie en particulier parmi des structures répondant aux formules générales indiquées ci-dessous

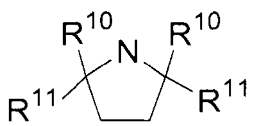 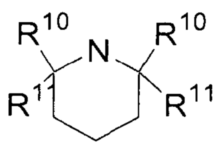 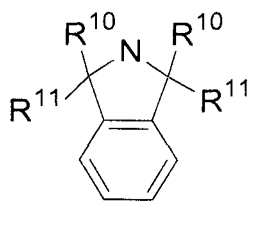

dans lequel où $R^{10}$ et $R^{11}$ sont respectivement à chaque fois identiques ou différents indépendamment l'un de l'autre et sont choisis dans le groupe constitué par des restes alkyle linéaires ou ramifiés et/ou non substitués ou substitués, notamment méthyle, éthyle, n-propyle, i-propyle, n-butyle, i-butyle, t-butyle, néopentyle, benzyle, cyclohexyle et hydrogène.

9. Procédé selon l'une quelconque des revendications précédentes, **caractérisé en ce que** l'initiateur B est, par rapport à la quantité totale des monomères A1 ou A1 et A2, en une quantité de 0,1 à 20 % en mole, de manière particulièrement préférée en une quantité de 0,2 à 10 mole % et de préférence en une quantité de 1 à 5 % en mole.

10. Procédé selon l'une quelconque des revendications précédentes, **caractérisé en ce que**

le au moins un agent réactif C est choisi dans le groupe constitué par des phénols substitués, notamment le 2,6-di-tert-butyl-p-crésol, l'octadécyl-3-(3,5-di-tert-butyl-4-hydroxyphényl)-propionate, le 2,6-di-tert-butylphénol, l'hydroquinone ; et des monomères non homopolymérisables, en particulier l'anhydride maléique ou l'éther isobutylvinylique, et/ou
le au moins un agent réactif C est utilisé en une quantité de 10 à 1 000 % en mole, de préférence de 90 à 200

% en mole, et de manière tout particulièrement préférée de 100 à 150 % en mole, sur la base de la concentration de l'initiateur B.

**11.** Procédé selon l'une quelconque des revendications précédentes, **caractérisé en ce que** le mélange compatible avec une polymérisation par voie radicalaire contient ou est constitué d'un solvant, dans lequel le solvant est notamment choisi dans le groupe constitué par le PGMEA, l'acétate d'éthyle, le toluène, le xylène, l'éthylbenzène, l'anisole, l'acétone, la 2-butanone, l'acétonitrile, le diméthylsulfoxyde, le tétrahydrofuranne, le dioxane, l'éther diéthylique, l'éther tert-butyl-méthylique, le pentane, l'hexane, l'heptane, le cyclopentane, le cyclohexane, le méthanol, l'éthanol, le n-propanol, l'i-propanol, le n-butanol, le t-butanol, l'éthylèneglycol, le propylèneglycol, le diéthylèneglycol, l'éther monométhylique d'éthylèneglycol, l'éther diméthylique d'éthylèneglycol, l'éther monométhylique de diéthylèneglycol, l'éther diméthylique de diéthylèneglycol, l'éther monobutylique de diéthylèneglycol et des mélanges et combinaisons de ceux-ci.

**12.** Procédé selon l'une quelconque des revendications précédentes, **caractérisé en ce que**

la réaction de polymérisation est initiée thermiquement ou actiniquement, et/ou
la température d'initiation et/ou de réaction de polymérisation est réglée entre 60 et 180°C, de préférence entre 90 et 140°C, de manière particulièrement préférée entre 100 et 130°C, et/ou
après l'achèvement de l'étape c), le groupe protecteur du monomère hydroxystyrène A1 lié dans le polymérisat est clivé.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6107425 A
- EP 0542523 A1
- US 4898916 A
- JP 4209661 A
- EP 1479700 A1
- EP 1572751 B1
- JP 2000026535 A
- US 2005004310 A1
- US 2008280070 A1


### In der Beschreibung aufgeführte Nicht-Patentliteratur


- **C. MACK.** Fundamental Principles of Optical Lithography: The Science of Microfabrication. John Wiley & Sons Ltd, 2007
- Imaging Technology, 4. Imaging for Electronics. **H. STEPPAN ; D. C. MAMMATO ; T. STOUDT ; M. C. P. WATTS.** Ullmann's Ecyclopedia of Industrial Chemistry. Wiley-VCH, 2012
- **Z. J. WANG ; M. MARIC.** *Polymers,* 2014, vol. 6, 565-582
- Photolithography. **R. LEUSCHNER ; G. PAWLOWSKI.** Handbook of Semiconductor Technology. Wiley VCH, 2000, vol. 2
- **A.H.E. MÜLLER ; K. MATYJASZEWSKI.** Controlled and Living Polymerizations. Wiley VCH, 2009
- **B. GAO. ; X. CHEN ; B. IVÁN ; J. KOPS ; W. BATSBERG.** *Macromol. Rapid Commun.,* 1997, vol. 18, 1095-1100
- **E. MALMSTRÖM ; R. D. MILLER ; C. J. HAWKER.** *Tetrahedron,* 1997, vol. 53 (45), 15225-15236
- **H. JIANYING ; L. JIAN ; L. MINGHUA ; L. QIANG ; D. LIZONG ; Z. YOUSI.** *J. Polym. Sci. A Polym. Chem.,* 2005, vol. 43, 5246-5256
- **VON J. NICOLAS ; Y. GUILLANEUF ; C. LEFAY ; D. BERTIN ; D. GIGMES ; B. CHARLEUX.** *Progress in Polymer Science,* 2013, vol. 38, 63-235
- **C. ANGER ; F. DEUBEL ; S. SALZINGER ; J. STOHRER ; T. HALBACH ; R. JORDAN ; J. G. C. VEINOT ; B. RIEGER.** *ACS Macro Lett.,* 2013, vol. 2, 121-124
- **G. G. BARCLAY ; C. J. HAWKER ; H. ITO ; A. ORELLANA ; P. R. L. MALENFANT ; R. F. SINTA.** *Macromolecules,* 1998, vol. 31, 1024-1031
- **J. AREEPHONG ; K. M. MATTSON ; N. J. TREAT ; S. O. POELMA ; J. W. KRAMER ; H. A. SPRAFKE ; A. A. LATIMER ; J. READ DE ALANIZA ; C. J. HAWKER.** *Polym. Chem.,* 2016, vol. 7, 370
- **M. MESSERSCHMIDT ; M. MILLARUELO ; H. KOMBER ; L. HÄUSSLER ; B. VOIT ; T. KRAUSE ; M. YIN ; W.-D. HABICHER.** *Macromolecules,* 2008, vol. 41, 2821-2831
- **H. MALZ ; H. KOMBER ; D. VOIGT.** *J. Pionteck Macromol. Chem. Phys.,* 1998, vol. 199, 583-588
- **VON Y. GUILLANEUF ; P.-E. DUFILS ; L. AUTISSIER ; M. ROLLET ; D GIGMES ; D. BERTIN.** *Macromolecules,* 2010, vol. 43, 91-100
- **L. PETTON ; A. E. CIOLINO ; B. DERVAUX ; F E. DU PREZ.** *Polym. Chem.,* 2012, vol. 3, 1867-1878
- **G. CHESSA et al.** Synthese von drei- oder sechsarmigem Polystyrol mittels lebender kontrollierter freier radikalischer Polymerisation. *Polymer.,* vol. 42 (23), 9347-9353
- **M. BAUMANN.** *Macromol. Chem.,* vol. 202 (13), 2727-2731
- **NICOLAS.** *Progress in Polymer Science,* 2013, vol. 38, 63-235